# EUROPÄISCHE PATENTSCHRIFT

(11) **EP 3 839 271 B1**
(45) Veröffentlichungstag und Bekanntmachung des Hinweises auf die Patenterteilung: **15.06.2022**
(21) Anmeldenummer: 20210266.1
(22) Anmeldetag: 27.11.2020
(51) Int. Cl.: F16B 5/01, B29C 65/08

(54) **DÜBEL ZUR ANORDNUNG IN LEICHTBAUPLATTEN, VERFAHREN ZUM FIXIEREN UND ANORDNUNG**
DOWEL FOR ARRANGEMENT IN LIGHTWEIGHT BUILDING PANELS, METHOD FOR FIXING AND AN ARRANGEMENT.
GOUJON DESTINÉ À ÊTRE AGENCÉ DANS DES PLAQUES DE CONSTRUCTION LÉGÈRE, PROCÉDÉ DE FIXATION ET UN AGENCEMENT.

(30) Priorität: 16.12.2019 DE 102019219753
(43) Veröffentlichungstag der Anmeldung: 23.06.2021
(73) Patentinhaber: Adolf Würth GmbH & Co. KG, 74653 Künzelsau (DE); Würth International AG, 7000 Chur (CH)
(72) Erfinder: Beck, Daniel, 69168 Wiesloch (DE); Schulze Niehues, Thorsten, 74653 Künzelsau (DE)
(74) Vertreter: Patentanwälte Ruff, Wilhelm, Beier, Dauster & Partner mbB

(56) Entgegenhaltungen:
- EP-B1- 2 202 050
- WO-A1-2018/135996
- DE-A1-102014 214 903
- US-A1- 2015 174 818

## Beschreibung

Die Erfindung betrifft einen Dübel zur Anordnung in Leichtbauplatten, wobei eine Leichtbauplatte eine erste Deckschicht und eine zweite Deckschicht aus kompaktem drucksteifem Material und eine zwischen den Deckschichten angeordnete Kernschicht aus Material mit gegenüber den Deckschichten geringer Dichte aufweist, insbesondere Papierwaben, Schaumstoff oder Vollholz mit geringer Dichte, mit einem ersten Dübelteil und einem zweiten Dübelteil, wobei das erste und das zweite Dübelteil relativ zueinander verschiebbar ausgebildet sind. Die Erfindung betrifft auch ein Verfahren zum Fixieren wenigstens eines Dübels und eine Anordnung mit wenigstens einem Dübel.

Aus der europäischen Patentschrift EP 2 202 050 B1 ist ein Dübel zur Anordnung in Leichtbauplatten bekannt, der ein Hülsenelement und ein Kolbenelement aufweist, wobei das Kolbenelement einen Schaftabschnitt aufweist und in einer axialen Richtung in Bezug auf das Hülsenelement verschiebbar ist. Der Dübel wird in eine vorbereitete Sacklochbohrung in die Leichtbauplatte eingesteckt. Das Hülsenelement umgibt über einen Abschnitt von dessen Länge das Kolbenelement vollständig. Durch Einkoppeln mechanischer Ultraschallschwingungen in das Kolbenelement wird eine relativ große Menge an thermoplastischem Kunststoffmaterial, aus dem sowohl das Kolbenelement als auch das Hülsenelement bestehen, verflüssigt und dieses dringt radial nach außen in die Strukturen der ersten Deckschicht und/oder entlang einer Innenoberfläche der ersten Deckschicht sowie in gleicher Weise in die zweite Deckschicht ein. Nach Verfestigung des verflüssigten thermoplastischen Materials ist eine formschlüssige Verbindung zu den beiden Deckschichten erzeugt. Anschließend kann eine Schraube in den im Kolbenelement vorgesehenen Schraubkanal eingebracht werden. Durch die beim Einbringen von mechanischer Ultraschallenergie erzeugte Wärme und den gleichzeitig erzeugten Druck kann es vor allem im Bereich der unteren Deckschicht zu Fehlstellen bzw. Abdrücken auf der Außenseite der unteren Deckschicht, aber auch auf der Außenseite der oberen Deckschicht kommen. Dies ist insbesondere dann der Fall, wenn die Deckschichten mit einer druckempfindlichen und/oder temperaturempfindlichen Oberflächenbeschichtung oder Oberflächenkaschierung versehen sind.

Aus der europäischen Offenlegungsschrift EP 3 228 879 A1 ist ein Verbindungsbeschlag zum Verbinden von zwei senkrecht zueinander angeordneten Leichtbauplatten bekannt, wobei beide Leichtbauplatten eine erste Deckschicht und eine zweite Deckschicht aus kompaktem, drucksteifem Material und eine zwischen den Deckschichten angeordnete Kernschicht aus Material mit gegenüber den Deckschichten geringer Dichte aufweisen. Die topfartig ausgebildeten Teile des Verbindungsbeschlags werden jeweils in eine Sacklochbohrung in den Leichtbauplatten eingebracht, wobei die Sacklochbohrungen jeweils nur die erste Deckschicht und die Kernschicht vollständig durchsetzen. Die beiden Teile des Verbindungsbeschlags weisen an ihrer Unterseite und an ihrer oberen Mantelfläche jeweils Vorsprünge auf, die aus unter Ultraschallbeaufschlagung aufschmelzbarem Kunststoff bestehen, so dass diese Vorsprünge bei Ultraschallbeaufschlagung aufschmelzen und sich im Sackloch mit der oberen und der unteren Deckschicht verbinden. In einem der Teile des Verbindungsbeschlags ist ein Schraubkanal ausgebildet, in welchen eine Schraube eingeschraubt werden kann.

Mit der Erfindung soll ein Dübel zur Anordnung in Leichtbauplatten, ein Verfahren zum Fixieren eines Dübels und eine Anordnung mit wenigstens einem Dübel verbessert werden.

Erfindungsgemäß ist hierzu ein Dübel mit den Merkmalen von Anspruch 1, ein Verfahren mit den Merkmalen von Anspruch 16 und eine Anordnung mit den Merkmalen von Anspruch 17 vorgesehen. Vorteilhafte Weiterbildungen der Erfindung ergeben sich aus den Unteransprüchen.

Mit der Erfindung wird ein Dübel zur Anordnung in Leichtbauplatten bereitgestellt. Eine Leichtbauplatte weist eine erste Deckschicht und eine zweite Deckschicht aus kompaktem drucksteifem Material und eine zwischen den Deckschichten angeordnete Kernschicht aus Material mit gegenüber den Deckschichten geringer Dichte auf. Als Kernschicht können insbesondere Papierwaben, Schaumstoff oder auch Vollholz mit geringer Dichte zum Einsatz kommen. Die Befestigung von Dübeln in Leichtbauplatten ist aufgrund der dünnen Deckschichten und der geringen Dichte und geringen Festigkeit der Kernschicht problematisch. Werden aber beispielsweise Kernschichtmaterialien mit einer erhöhten Festigkeit, beispielsweise leichte Vollhölzer wie zum Beispiel Balsaholz, mit dünnen, druck- und/oder temperaturempfindlichen und/oder nicht porösen Decklagenmaterialien zu einem Sandwich verpresst, kann auf eine Verbindung des Dübels mit den Deckschichten, insbesondere mit der, gegenüber der Einbringungsrichtung liegenden Deckschicht, verzichtet werden, und es kann nur eine Verbindung mit dem Kernschichtmaterial und/oder einer Grenzschicht zwischen Kernschichten und Deckschichten eingegangen werden. Gerade bei dünnen, druckempfindlichen, temperaturempfindlichen und/oder nicht porösen Deckschichtmaterialien ist dann das Einbringen eines Dübels, dessen Fixierung mittels Einbringung von Ultraschallenergie erfolgt, leichter und vor allem prozesssicher zu bewerkstelligen, da auf die empfindlichen Deckschichten weniger Acht gegeben werden muss.

Der erfindungsgemäße Dübel weist ein erstes Dübelteil und ein zweites Dübelteil auf, wobei das erste und das zweite Dübelteil relativ zueinander verschiebbar ausgebildet sind. Ein Verschiebeweg der beiden Dübelteile zueinander ist zwischen einer ersten Endposition und einer zweiten Endposition begrenzt. Die erste Endposition ist mittels erster Anschlagmittel am ersten Dübelteil und am zweiten Dübelteil definiert und die zweite Endposition ist mittels zweiter Anschlagmittel am ersten Dübelteil und am zweiten Dübelteil definiert.

Indem ein Verschiebeweg zwischen einer ersten Endposition und einer zweiten Endposition begrenzt ist, wird eine Transportsicherung für den Dübel geschaffen. Die beiden Dübelteile können sich somit relativ zueinander bewegen, was bei der Einleitung von Ultraschallenergie unerlässlich ist, um einerseits durch eine Relativbewegung der beiden Dübelteile zueinander eine Erwärmung, Plastifizierung und/oder Verflüssigung des Dübelmaterials an den Kontaktstellen der beiden Dübelteile zueinander und an den Kontaktstellen der Dübelteile mit der Leichtbauplatte zu bewirken. Andererseits können sich die beiden Dübelteile nicht voneinander lösen, wodurch eine Transportsicherung realisiert ist. Ein Verschiebeweg zwischen der ersten Endposition und der zweiten Endposition wird dabei gerade so groß gewählt, dass bei Ultraschallbeaufschlagung genügend Weg zur Verfügung steht, um die Ultraschallschwingungen effizient in Reibungsenergie umzusetzen.

In Weiterbildung der Erfindung definieren die erste Endposition und die zweite Endposition einen Verschiebeweg zwischen 100 µm und 1000 µm, insbesondere zwischen 150 µm und 240 µm.

Der Verschiebeweg wird vorteilhafterweise gerade so groß gewählt, dass auch unter Berücksichtigung von Toleranzen der Dübelteile der Verschiebeweg ausreichend groß ist, um eingeleitete Ultraschallenergie effizient in Reibungswärme umzusetzen. Es wird aber gleichzeitig vermieden, den Verschiebeweg unnötig groß zu wählen, um einen kompakten Dübel bereitzustellen, der durch seinen geringen Verschiebeweg Einbaufehler vermeidet. Die beiden Dübelteile sind relativ zueinander verschiebbar. Wird der Verschiebeweg möglichst kurz gewählt, sinkt die Gefahr, dass die beiden Dübelteile beim Fixieren sich nicht in der beabsichtigten Art und Weise relativ zueinander verschieben, beispielsweise schräg zueinander verschoben werden oder dergleichen. Gerade bei Leichtbauplatten mit Kernschichtmaterialien mit sehr geringer Dichte besteht eine solche Gefahr. Ein Verschiebeweg zwischen 150µm und etwa 300µm, insbesondere 240µm, hat sich als besonders vorteilhaft hinsichtlich einer effizienten Einleitung von Ultraschallenergie erwiesen.

In Weiterbildung der Erfindung definieren die erste Endposition und die zweite Endposition einen Verschiebeweg, der zwischen dem Zweifachen und dem Vierfachen der Amplitude einer Sonotrode liegt, insbesondere das Dreifache der Amplitude der Sonotrode beträgt, wobei die Sonotrode für die Ultraschallbeaufschlagung des Dübels verwendet wird.

Die Ultraschallbeaufschlagung mittels der Sonotrode erfordert eine Verschiebbarkeit der beiden Dübelteile zueinander, um zwischen den Dübelteilen sowie zwischen den Dübelteilen und der Leichtbauplatte Reibungsenergie in Wärme umzuwandeln. Um die Ultraschallenergie möglichst effizient in Reibungswärme umzuwandeln, sollte zumindest zu Beginn der Ultraschallbeaufschlagung das Dübelteil, das die Sonotrode berührt oder in das die Ultraschallenergie zuerst eingeleitet wird, der Schwingung der Sonotrode folgen können. Infolgedessen sollte der Verschiebeweg zwischen den beiden Endpositionen mindestens die doppelte Amplitude der Sonotrodenschwingung betragen. Versuche haben ergeben, dass ein Verschiebeweg, der der dreifachen Amplitude der Sonotrode entspricht, besonders vorteilhaft ist und eine sehr effiziente Umwandlung der Ultraschallenergie in Reibungswärme ermöglicht.

In Weiterbildung der Erfindung weisen das erste Dübelteil und das zweite Dübelteil jeweils wenigstens zwei sich parallel zu einer Längsrichtung des Dübels erstreckende Finger auf, wobei die Finger des ersten Dübelteils und die Finger des zweiten Dübelteils im zusammengesteckten Zustand des ersten und des zweiten Dübelteils mindestens abschnittsweise ineinandergreifen, wobei die ersten Anschlagmittel, die die erste Endposition definieren, mittels wenigstens eines der Finger eines der Dübelteile realisiert sind, der mit seinem freien Ende an einem gegenüberliegenden Element des jeweils anderen Dübelteils anliegt.

Auf diese Weise wird die erste Endposition mittels Elementen der beiden Dübelteile definiert, die dann beim Einleiten von Ultraschallenergie relativ zueinander bewegt werden, erwärmt werden und dann plastifiziert oder verflüssigt werden.

In Weiterbildung der Erfindung sind die zweiten Anschlagmittel, die die zweite Endposition definieren, mittels Rastelementen an den beiden Dübelteilen realisiert.

Dadurch können die beiden Dübelteile, die beispielsweise getrennt hergestellt werden, ineinandergeschoben werden, bis die Rastelemente der zweiten Anschlagmittel ineinander einrasten. Die beiden Dübelteile sind dann unverlierbar aneinander befestigt und dennoch ist eine relative Verschiebbarkeit der beiden Dübelteile zueinander gewährleistet.

In Weiterbildung der Erfindung weisen die Rastelemente wenigstens teilweise radial nach innen, in Richtung auf eine Mittellängsachse des Dübelteils zu, vorragende Rastnasen auf.

Mittels radial nach innen vorragender Rastnasen können zuverlässig wirkende Anschlagmittel definiert werden, die darüber hinaus so ausgebildet werden können, dass eine Spritzgussform für die Dübelteile ohne Hinterschnitte ausgebildet werden kann.

In Weiterbildung der Erfindung ist jeweils eine Rastnase an einem sich im Wesentlichen parallel zur Mittellängsachse des Dübelteils erstreckenden Rastarm angeordnet.

Mittels eines Rastarms kann eine Federbewegung der Rastnase in sehr einfacher Weise realisiert werden.

In Weiterbildung der Erfindung weisen die Rastnasen, in einer Richtung parallel zur Mittellängsachse des Dübelteils gesehen, eine abgerundete Form auf.

Dadurch können die Rastnasen zweier identischer Dübelteile aneinander vorbeigleiten, bis eine Einrastposition erreicht ist. Mittels der abgerundeten Form des Rastnasen können Anlaufschrägen ausgebildet werden. Beim Einstecken der Dübelteile ineinander werden die Rastnasen dadurch ausgelenkt. Es ist zwar vorteilhaft, dass die beiden Dübelteile identisch zueinander ausgebildet sind, im Rahmen der Erfindung können sich das erste Dübelteil und das zweite Dübelteil aber durchaus voneinander unterscheiden.

In Weiterbildung der Erfindung weisen die Rastnasen, in einer Richtung senkrecht zur Mittellängsachse gesehen, jeweils wenigstens eine Anlaufschräge auf.

Beim Einstecken der beiden Dübelteile ineinander werden die Rastnasen durch die Wirkung der aneinander vorbei gleitenden Anlaufschrägen ausgelenkt, bis eine Einrastposition erreicht ist, die die Rastnasen dann zurückfedern.

In Weiterbildung der Erfindung bilden wenigstens zwei Rastnasen gemeinsam einen Abschnitt eines Schraubkanals in dem Dübel.

Dadurch haben die Rastnasen eine Doppelfunktion, nämlich einmal die zweite Endposition der beiden Dübelteile zueinander zu definieren und dann noch wenigstens Abschnitte eines Schraubkanals bereitzustellen. Der erfindungsgemäße Dübel kann dadurch mit geringem Materialaufwand hergestellt werden.

In Weiterbildung der Erfindung sind zwei bis sechs Rastnasen, insbesondere vier Rastnasen, an jedem Dübelteil vorgesehen.

Durch eine größere Anzahl Rastnasen kann zum einen eine sichere Rastwirkung und damit eine sichere Definition der zweiten Endposition erzielt werden, und da die Rastnasen vorteilhafterweise gleichzeitig einen Abschnitt eines Schraubkanals definieren, kann ein zuverlässiger Halt einer Schraube in dem Schraubkanal sichergestellt werden.

In Weiterbildung der Erfindung weisen das erste Dübelteil und das zweite Dübelteil jeweils wenigstens zwei sich im Wesentlichen beziehungsweise mit einer Hauptkomponente parallel zur Mittellängsachse des Dübels erstreckende Rastarme auf, an deren Ende jeweils eine sich senkrecht zur Mittellängsachse erstreckende Rastnase angeordnet ist.

Die Rastnase ragt dadurch radial nach innen gegenüber dem Rastarm vor. Beim Einstecken zweier Dübelteile ineinander wird dadurch die Rastnase zunächst ausgelenkt, bis sie die Rastposition erreicht hat, beispielsweise durch die Wirkung einer oder mehrerer Anlaufschrägen, und schnappt dann in die Einrastposition zurück. Eine Federvorspannung wird dabei hauptsächlich durch Verbiegen des Rastarms erzielt.

In Weiterbildung der Erfindung ist dann, wenn sich die beiden Dübelteile relativ zueinander zwischen den beiden Endpositionen befinden, in einer Projektion parallel zur Mittellängsachse gesehen, jeweils eine Rastnase des ersten Dübelteils zwischen zwei Rastnasen des zweiten Dübelteils angeordnet. Die Rastnasen des ersten und des zweiten Dübelteils können identisch ausgebildet sein, im Rahmen der Erfindung können sie aber auch unterschiedlich ausgebildet sein.

Eine Rastwirkung wird dadurch über Rastflächen im Bereich der seitlich liegenden Begrenzungen der Rastnasen erzielt. Dies ermöglicht es, zwei identische Dübelteile zu verwenden. Eine Haltekraft der aneinander angreifenden Rastnasen ist auch bei einer kleinen Fläche der seitlichen Begrenzungen groß genug, da ja lediglich der Verschiebeweg der beiden Dübelteile zueinander begrenzt werden muss, um eine Transportsicherung zu realisieren.

In Weiterbildung der Erfindung liegen im zusammengesteckten Zustand der Dübelteile und dann, wenn die beiden Dübelteile die zweite Endposition zueinander einnehmen, die Rastnasen des ersten Dübelteils und die Rastnasen des zweiten Dübelteils lediglich im Bereich von Rastflächen aneinander an, die an seitliche Begrenzungen der Rastnasen anschließen.

In Weiterbildung der Erfindung sind die beiden Dübelteile identisch zueinander ausgebildet.

Auf diese Weise kann ein- und dieselbe Spritzgussform für die Herstellung der beiden Dübelteile verwendet werden. Dadurch ist eine kostengünstige Herstellung möglich. Dies auch deshalb, da für den Dübel lediglich ein Dübelteil auf Lager gehalten werden muss. Spritzgussformen für die beiden Dübelteile können so ausgebildet werden, dass sie keine Hinterschnitte haben und infolgedessen ohne kostenträchtige Schieber oder dergleichen auskommen.

Das der Erfindung zugrunde liegende Problem wird auch durch ein Verfahren zum Fixieren wenigstens eines erfindungsgemäßen Dübels gelöst, bei dem folgende Schritte vorgesehen sind: Einbringen eines Lochs in eine Leichtbauplatte, insbesondere eines Sacklochs, Einbringen des Dübels im zusammengesteckten Zustand in das Sackloch, wobei die Dübelteile sich im zusammengesteckten Zustand relativ zueinander zwischen der ersten Endposition und der zweiten Endposition verschieben können, Beaufschlagen des Dübels mit Ultraschallenergie, so dass das Material des Dübels wenigstens in den Bereichen, in denen der Dübel an der Innenwandung des Lochs im Bereich der ersten Deckschicht, der zweiten Deckschicht und/oder im Bereich der Kernschicht anliegt, erwärmt und in pastösen oder fließfähigen Zustand gebracht wird, in wenigstens eine der Deckschichten und/oder die Kernschicht eindringt und nach dem Abschalten der Ultraschallenergie erkaltet, so dass der Dübel stoffschlüssig und/oder formschlüssig in der Leichtbauplatte fixiert wird.

Das der Erfindung zugrunde liegende Problem wird auch durch eine Anordnung mit wenigstens einem erfindungsgemäßen Dübel in einer Leichtbauplatte gelöst.

Der erfindungsgemäße Dübel kann so ausgebildet sein, dass er in dem Zustand, in dem er in der Leichtbauplatte fixiert ist, die obere Deckschicht und/oder die untere Deckschicht hintergreift und dadurch formschlüssig zwischen den beiden Deckschichten gesichert ist. Alternativ oder zusätzlich kann der Dübel auch formschlüssig und/oder stoffschlüssig mit der Kernschicht der Leichtbauplatte verbunden sein. Die erfindungsgemäße Anordnung ist dadurch prozesssicher zu realisieren, da bei druckempfindlichen und/oder temperaturempfindlichen Deckschichten der Leichtbauplatte nicht befürchtet werden muss, dass die untere Deckschicht Druckstellen oder Fehlstellen durch zu starke Erhitzung aufweist. Dennoch ist der erfindungsgemäße Dübel sicher in der Leichtbauplatte fixiert und kann hohe Auszugskräfte einer Schraube, die in den Dübel eingedreht wird, bereitstellen.

Weitere Merkmale und Vorteile der Erfindung ergeben sich aus den Ansprüchen und der nachfolgenden Beschreibung im Zusammenhang mit den Zeichnungen. Einzelmerkmale der unterschiedlichen, beschriebenen und dargestellten Ausführungsformen lassen sich dabei in beliebiger Weise kombinieren, ohne den Rahmen der Erfindung zu überschreiten. Dies gilt auch für die Kombination von Einzelmerkmalen ohne weitere Einzelmerkmale, mit denen sie im Zusammenhang dargestellt und/oder beschrieben sind. In den Zeichnungen zeigen:
- Fig. 1: eine isometrische Darstellung eines ersten Dübelteils eines erfindungsgemäßen Dübels von schräg oben,
- Fig. 2: das Dübelteil der Fig. 1 in einer um 180° gedrehten Position, wobei das Dübelteil der Fig. 1 und Fig. 2 sowohl als erstes als auch als zweites Dübelteil des erfindungsgemäßen Dübels zum Einsatz kommen kann,
- Fig. 3: das Dübelteil der Fig. 2 von unten,
- Fig. 4: das Dübelteil der Fig. 2 von oben,
- Fig. 5: eine Ansicht von schräg oben auf das geschnittene Dübelteil der Fig. 2,
- Fig. 6: das geschnittene Dübelteil der Fig. 5 in einer Seitenansicht,
- Fig. 7: einen erfindungsgemäßen Dübel von schräg oben, wobei das Dübelteil der Fig. 1 und das Dübelteil der Fig. 2 ein Stück weit zusammengesteckt wurden,
- Fig. 8: den Dübel der Fig. 7 von oben,
- Fig. 9: eine Ansicht von schräg oben auf den geschnittenen Dübel der Fig. 7,
- Fig. 10: eine Seitenansicht des geschnittenen Dübels der Fig. 9,
- Fig. 11: die Darstellung des Dübels der Fig. 7 im vollständig zusammengesteckten und verrasteten Zustand,
- Fig. 12: den Dübel der Fig. 11 von oben,
- Fig. 13: den Dübel der Fig. 11 in einer Schnittansicht von schräg oben,
- Fig. 14: die Schnittansicht der Fig. 13 in einer Seitenansicht,
- Fig. 15: eine vergrößerte Ansicht der Darstellung der Fig. 12 sowie eine Ausschnittsvergrößerung hiervon,
- Fig. 16: eine Schnittansicht und vergrößerte Einzelheit des erfindungsgemäßen Dübels, wenn sich die beiden Dübelteile zueinander in der ersten Endposition befinden,
- Fig. 17: eine Schnittansicht und vergrößerte Einzelheit des erfindungsgemäßen Dübels, wenn sich die beiden Dübelteile in der zweiten Endposition zueinander befinden,
- Fig. 18: Begriffserläuterungen und Definitionen für die folgenden Figuren,
- Fig. 19: den Schwingungsverlauf einer Sonotrode zum Beaufschlagen des erfindungsgemäßen Dübels mit Ultraschallenergie,
- Fig. 20: eine schematische Darstellung einer Ultraschall-Sonotrode, des ersten Dübelteils und des zweiten Dübelteils vor dem Zusammenstecken der Dübelteile,
- Fig. 21: eine schematische Darstellung der Ultraschall-Sonotrode, des ersten Dübelteils und des zweiten Dübelteils im zusammengesteckten Zustand, wenn sich die beiden Dübelteile in der zweiten Endposition zueinander befinden,
- Fig. 22: eine schematische Darstellung der Ultraschall-Sonotrode, des ersten Dübelteils und des zweiten Dübelteils, wenn sich die beiden Dübelteile in der ersten Endposition zueinander befinden,
- Fig. 23: eine schematische Schnittansicht einer Leichtbauplatte einer erfindungsgemäßen Anordnung nach dem Einbringen eines Sacklochs mit einer ersten Ausbildung,
- Fig. 24: eine schematische Schnittansicht einer Leichtbauplatte einer erfindungsgemäßen Anordnung nach dem Einbringen eines Sacklochs gemäß einer zweiten Ausbildung,
- Fig. 25: eine schematische Schnittansicht einer Leichtbauplatte einer erfindungsgemäßen Anordnung nach dem Einbringen eines Sacklochs gemäß einer dritten Ausbildung,
- Fig. 26: die Leichtbauplatte der Fig. 23 nach dem Einstecken eines erfindungsgemäßen Dübels in das Sackloch,
- Fig. 27: die Leichtbauplatte der Fig. 26 nach dem Fixieren des Dübels in der Leichtbauplatte,
- Fig. 28: eine isometrische Ansicht eines Dübelteils gemäß einer zweiten Ausführungsform der Erfindung von schräg oben, das zusammen mit dem Dübelteil der Fig. 1 einen erfindungsgemäßen Dübel bilden kann,
- Fig. 29: das Dübelteil der Fig. 28, das gegenüber der Ansicht der Fig. 28 um 45° um die Mittellängsachse gedreht ist,
- Fig. 30: das Dübelteil der Fig. 28 in einer Seitenansicht,
- Fig. 31: eine Seitenansicht des Dübelteils der Fig. 30, das um 45° um die Mittellängsachse gedreht ist,
- Fig. 32: das Dübelteil der Fig. 28 von oben,
- Fig. 33: das Dübelteil der Fig. 28 von unten,
- Fig. 34: das Dübelteil der Fig. 1 und das Dübelteil der Fig. 28 in einer Ansicht von schräg oben, wobei die beiden Dübelteile ein Stück weit zusammengesteckt sind,
- Fig. 35: den Dübel der Fig. 34 im vollständig zusammengesteckten Zustand,
- Fig. 36: den Dübel der Fig. 34 von oben,
- Fig. 37: den Dübel der Fig. 34 von unten,
- Fig. 38: eine Schnittansicht des Dübels der Fig. 35 in der ersten Endposition der beiden Dübelteile zueinander,
- Fig. 39: eine weitere Schnittansicht des Dübels der Fig. 35 , wobei die Schnittebene anders verläuft als in Fig. 37,
- Fig. 40: den geschnittenen Dübel gemäß Fig. 39 von der Seite und
- Fig. 41: den geschnittenen Dübel gemäß Fig. 38 von der Seite.

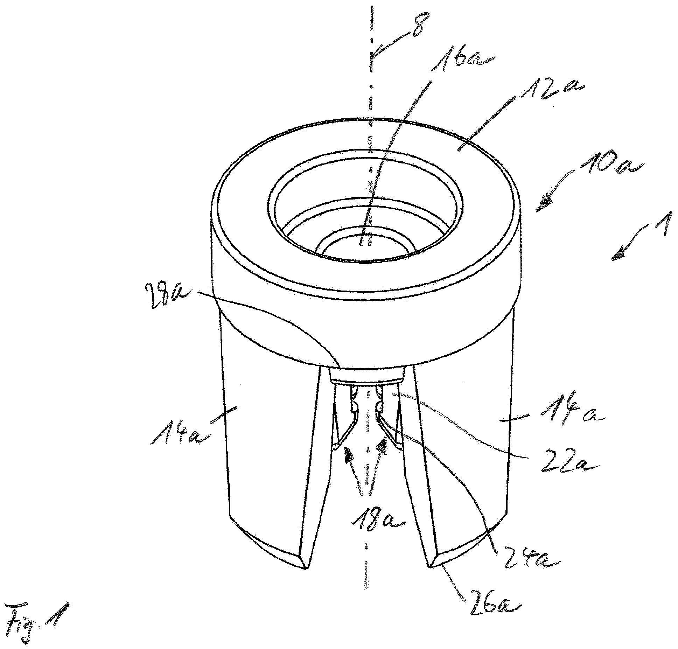

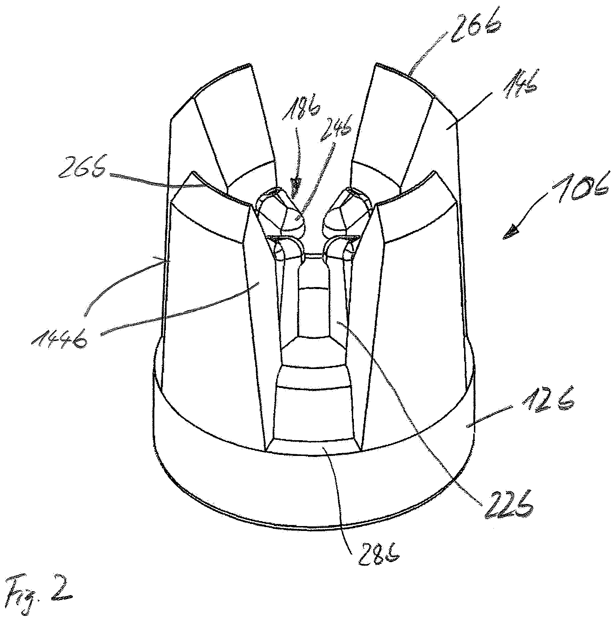

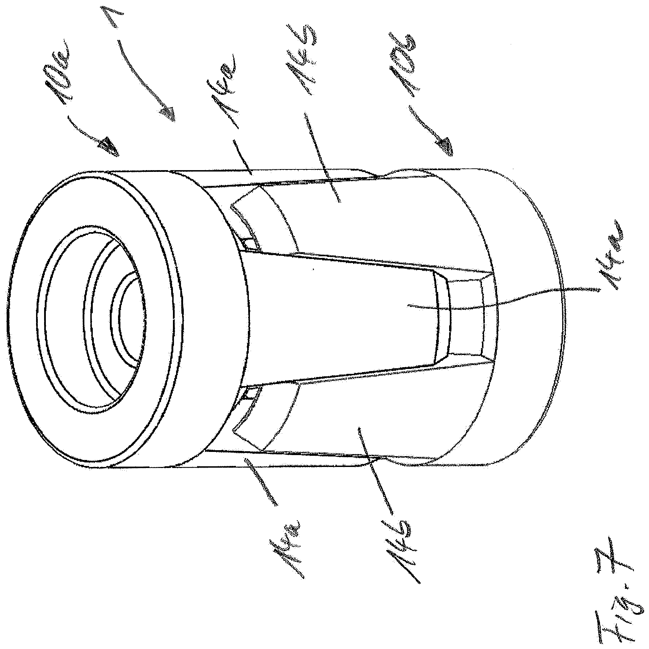

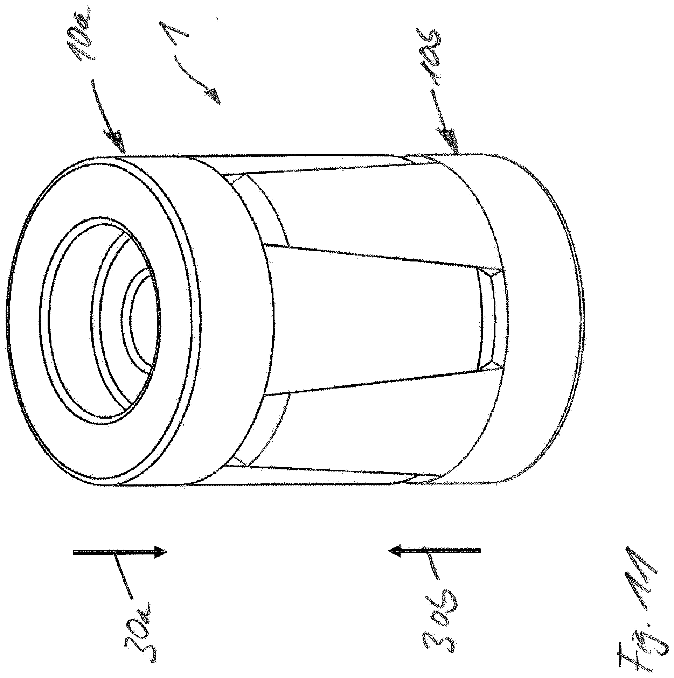

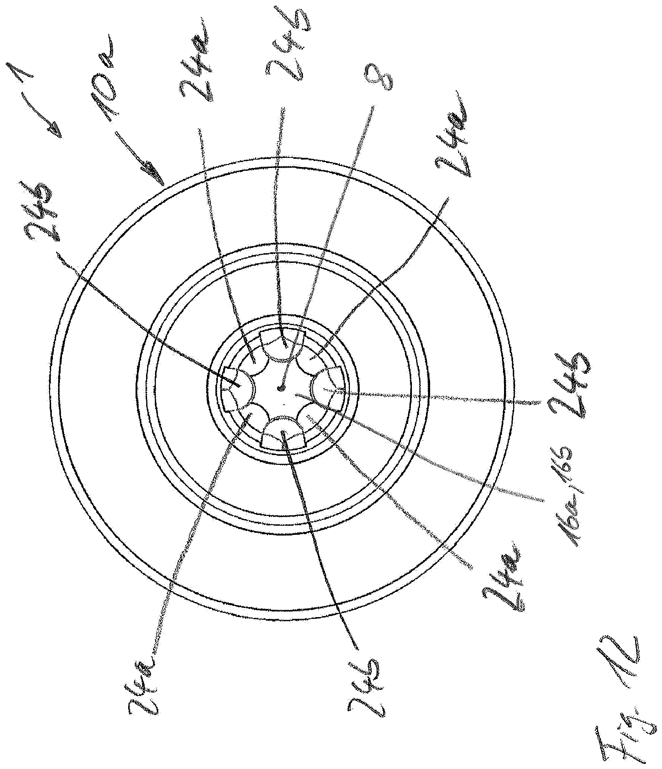

Fig. 1 zeigt eine Ansicht eines ersten Dübelteils 10a eines erfindungsgemäßen Dübels 1 von schräg oben. Der erfindungsgemäße Dübel kann aus zwei identischen Dübelteilen 10 aufgebaut werden. Hierzu wird das erste Dübelteil 10a um 180° in die in Fig. 2 dargestellte Position gedreht und wird der Übersichtlichkeit halber in Fig. 2 als zweites Dübelteil 106 bezeichnet. Das erste Dübelteil 10a und das zweite Dübelteil 106 werden dann aufeinander aufgesetzt, so dass sich die in Fig. 7 dargestellte Position ergibt, in der die Dübelteile 10a, 10b ein Stück weit zusammengesteckt aber noch nicht unverlierbar miteinander verbunden sind. Ausgehend von der Position der Fig. 7 werden die beiden Dübelteile 10a, 10b dann gemäß Fig. 11 aufeinander zubewegt, bis an den beiden Dübelteilen 10a, 10b vorhandene Rastelemente ineinander einrasten und der in den Fig. 11 bis 17 erläuterte vollständig zusammengesteckte Zustand erreicht ist, in dem die beiden Dübelteile10a, 10b zur Realisierung einer Transportsicherung unverlierbar miteinander verbunden sind. Im vollständig zusammengesteckten Zustand der Fig. 12 bis 17 sind die beiden Dübelteile 10a, 10b dennoch relativ zueinander verschiebbar, wobei ein Verschiebeweg zwischen einer ersten Endposition und einer zweiten Endposition begrenzt ist, was noch erläutert wird.

Fig. 1 zeigt, dass das erste Dübelteil 10 eine ringförmige Basis 12a aufweist, von deren Unterseite sich insgesamt vier Finger 14a erstrecken. Die ringförmige Basis 12a bildet einen ersten Abschnitt eines Schraubkanals 16a, der noch erläutert wird.

Zwischen zwei Fingern 14a des ersten Dübelteils 10 sind Rastelemente 18a zu erkennen, die jeweils einen Rastarm 22a und eine Rastnase 24a aufweisen. Die Rastarme 22a verlaufen annähernd parallel zu einer Mittellängsachse des ersten Dübelteils 10. Die Rastnasen 24a, die am freien Ende der Rastarme 22a angeordnet sind, erstrecken sich im Wesentlichen in Richtung auf eine Mittellängsachse 8 des Dübelteils 10 zu.

Das zweite Dübelteil 10b in Fig. 2 ist, wie bereits erläutert wurde, identisch zum ersten Dübelteil 10a ausgebildet. Die identischen Elemente des zweiten Dübelteils 10b werden mit den gleichen Ziffern, aber mit dem nachgestellten Buchstaben b bezeichnet. Die Finger 14a, 14b sind an ihren freien Enden im Querschnitt dachartig ausgebildet. Im zusammengesteckten Zustand kann dadurch das freie Ende 26a, 26b der Finger an einer Anschlagfläche 28a, 28b des Basisteils 12a, 12b anliegen. Beim Beaufschlagen der beiden Dübelteile 10a, 10b mit Ultraschallenergie werden infolgedessen die freien Enden 26a, 26b der beiden Dübelteile 10a, 10b erwärmt, plastifiziert und/oder verflüssigt und können dadurch für eine stoffschlüssige Verbindung der beiden Dübelteile 10a, 10b miteinander und für eine stoffschlüssige und/oder formschlüssige Verbindung des Dübels 1 mit einem Kernschichtmaterial einer Leichtbauplatte sorgen, da das verflüssigte Material in die Kernschicht eindringt. Darüber hinaus kann das verflüssigte Material mit den Deckschichten der Leichtbauplatte einen Hinterschnitt ausbilden und dadurch für eine formschlüssige Verankerung des Dübels 1 in der Leichtbauplatte sorgen. Beide Dübelteile 10a, 10b bestehen vollständig aus thermoplastischem Material, beispielsweise thermoplastischem Kunststoff. Es ist im Rahmen der Erfindung möglich, lediglich Teile der Dübelteile 10a, 10b aus thermoplastischem Material auszubilden, beispielsweise lediglich die freien Enden 26a, 26b der Finger 14a, 14b und die Anschlagflächen 28a, 28b.

Die Seitenflächen 144b der Finger 14b laufen in Richtung auf das freie Ende 26b aufeinander zu, so dass sich ein Querschnitt der Finger 14b senkrecht zur Mittellängsachse 8 in Richtung auf das freie Ende 26b zu verringert.

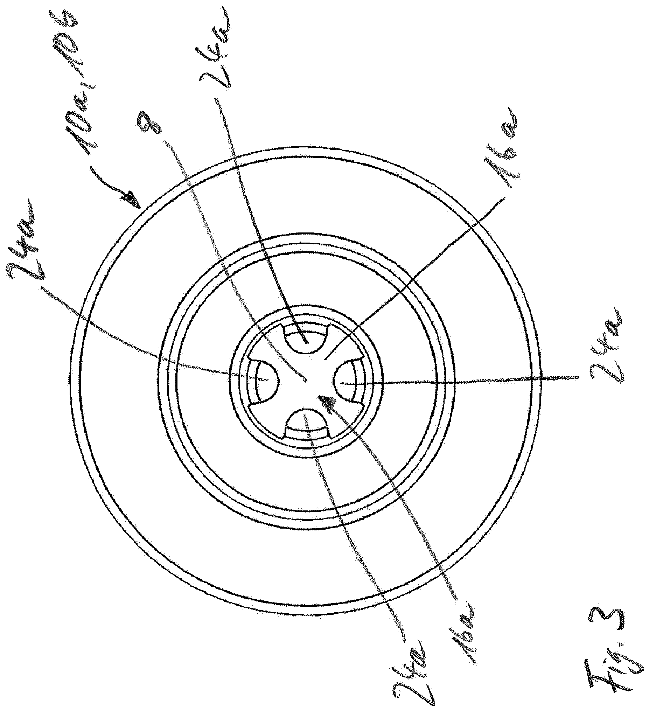

Fig. 3 zeigt das Dübelteil 10a, 10b in einer Ansicht von oben. Der Blick geht in Fig. 3 von oben in das Dübelteil 10a, 10b hinein. Es ist in dieser Ansicht zu erkennen, dass vier Rastnasen 24a vorgesehen sind, die in Richtung auf die Mittellängsachse8 vorragen. Die Rastnasen 24a können dadurch Abschnitte des Schraubkanals 16a bilden.

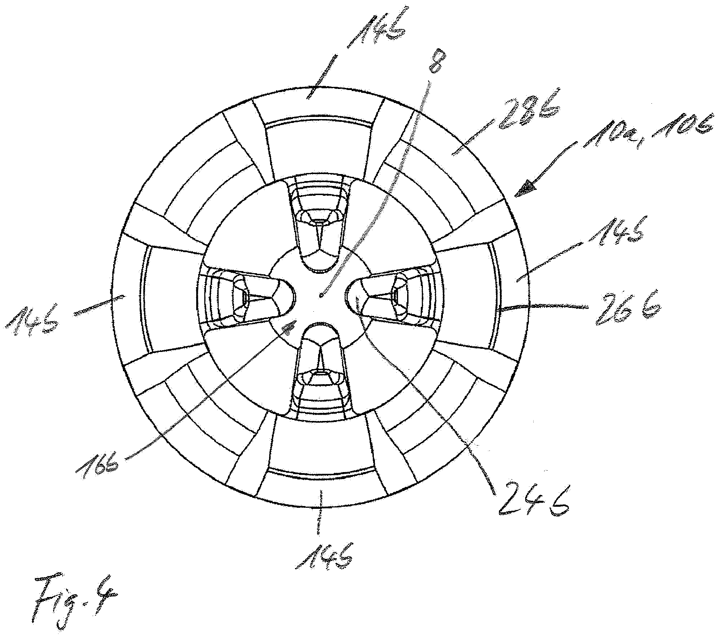

Fig. 4 zeigt eine Ansicht des Dübelteils 10a der Fig. 1 von unten bzw. eine Ansicht des Dübelteils 10b der Fig. 2 von oben. Zu erkennen sind die insgesamt vier Finger 14b und deren freie Enden 26b. Die freien Enden 26b werden nicht durch eine scharfe Kante, sondern durch eine geringfügig abgeplattete Kante gebildet. Dadurch steht beim Einleiten von Ultraschallenergie eine etwas größere Anlagefläche als beim Ausbildung einer scharfen Kante zur Verfügung, so dass eine Erwärmung der freien Enden 26b durch Verschiebung relativ zu den Anlageflächen 28a rascher erfolgt als beim Vorsehen einer scharfen Kante.

Auch in der Ansicht der Fig. 4 ist zu erkennen, dass die Rastnasen 24b in Richtung auf die Mittellängsachse 8 des Dübelteils vorragen und dadurch einen Abschnitt des Schraubkanals 16b bilden..

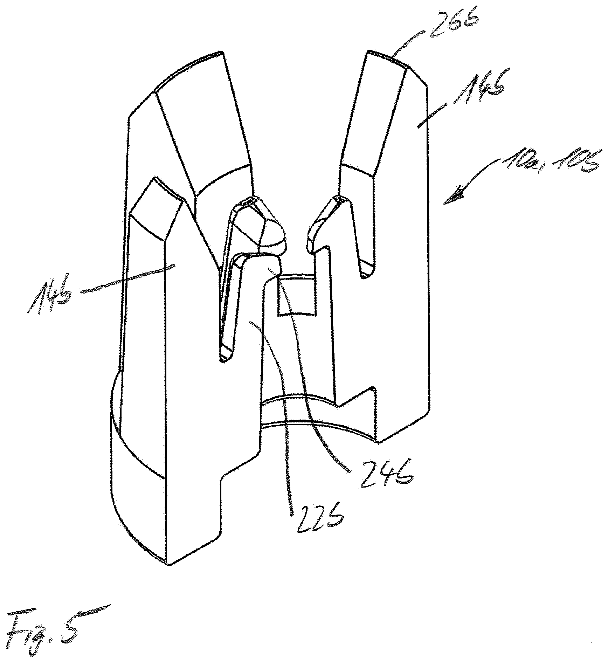

Fig. 5 zeigt eine Schnittansicht des Dübelteils 10a, 10b, wobei die Schnittebene durch zwei Finger 14b verläuft. In dieser Ansicht gut zu erkennen ist, dass die Rastarme 22b im Wesentlichen parallel zu den Fingern 14b und damit im Wesentlichen parallel zur Mittellängsachse 8 verlaufen. An den freien Enden der Rastarme 22b sind dann die Rastnasen 24b angeordnet, die in Richtung der Mittellängsachse vorragen. Es ist in der Ansicht der Fig. 5 zu erkennen, dass die Dübelteile 10a, 10b als Spritzgussteil in einer Form ohne Hinterschnitte hergestellt werden können. Von unten her bis an die Unterseite der Rastnasen 24b verliefe dann eine erste Hälfte der Form, von oben her würde ein zweiter Teil der Form aufgesetzt. Nach dem Trennen der beiden Formteile kann das fertige Dübelteil 10a, 10b entnommen werden. Die Spritzgussform benötigt keinerlei Schieber oder dergleichen und kann dadurch kostengünstig hergestellt werden. In Fig. 5 ist auch der dachartige Querschnitt oder sich verjüngende Querschnitt der Finger 14b zu erkennen.

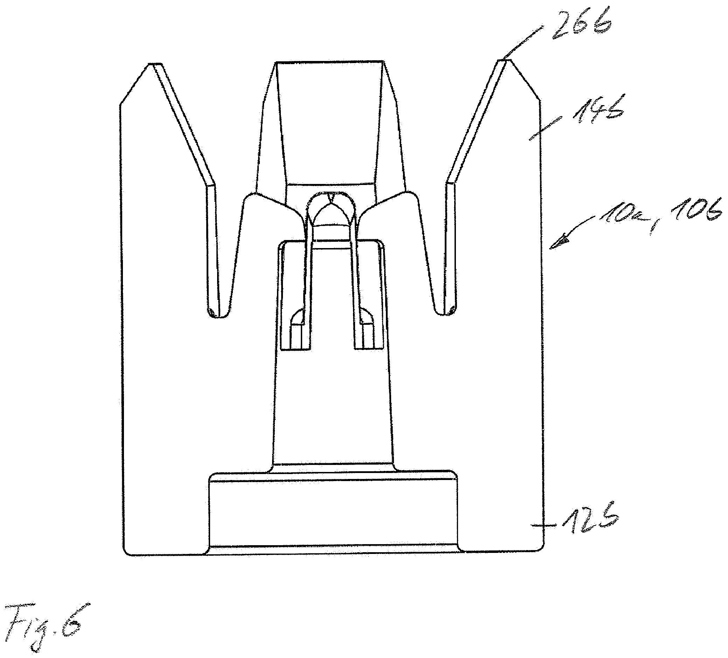

Fig. 6 zeigt das geschnittene Dübelteil 10a, 10b der Fig. 5 von der Seite.

In dieser Ansicht gut zu erkennen ist die im Querschnitt dachartige Form der freien Enden der Finger 14b, die in das leicht abgeplattete Ende 26b ausläuft.

Fig. 7 zeigt die beiden Dübelteile 10a, 10b in einem Zustand, in dem die Dübelteile aufeinander aufgesetzt sind, so dass die Finger 14a des ersten Dübelteils 10a abschnittsweise zwischen den Fingern 14b des zweiten Dübelteils 10b angeordnet sind und umgekehrt. In dem in Fig. 7 dargestellten Zustand sind die beiden Dübelteile 10a, 10b nur ein Stück weit und noch nicht vollständig ineinander eingesteckt. Ausgehend vom Zustand der Fig. 7 können die beiden Dübelteile 10a, 10b noch problemlos voneinander getrennt werden, indem also beispielsweise das in Fig. 7 obere Dübelteil 10a nach oben abgezogen wird.

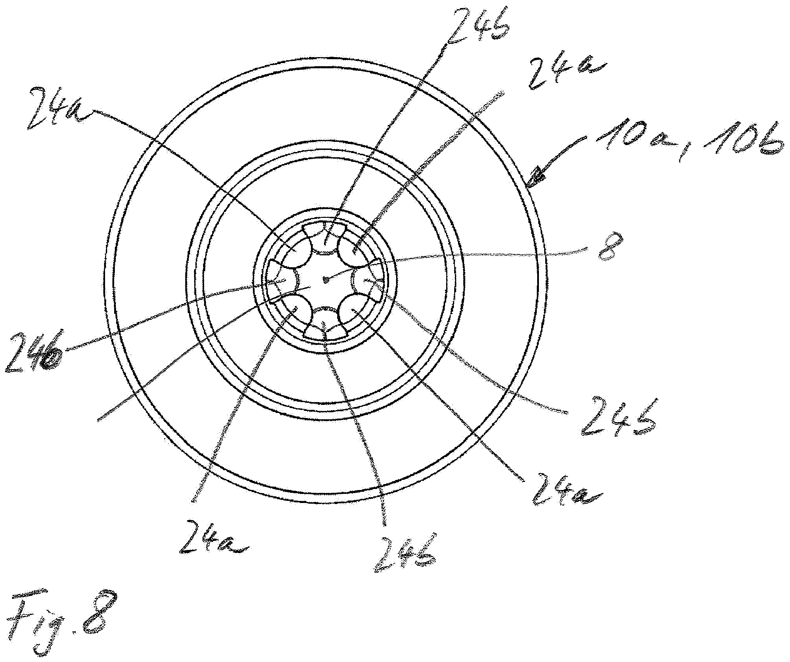

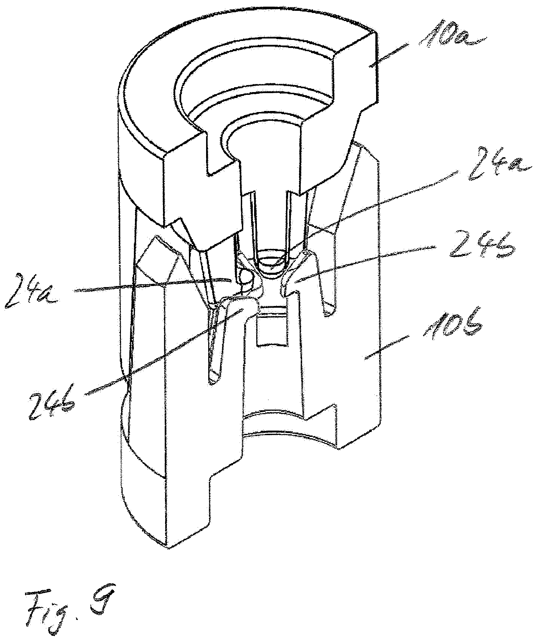

Die Darstellung der Fig. 8 zeigt die beiden Dübelteile 10a, 10b der Fig. 7 in einer Ansicht von oben. Von dem in Fig. 7 unteren Dübelteil 10b sind lediglich die Rastnasen 24b zu erkennen, die in der Projektion der Fig. 8 parallel zur Mittellängsachse zwischen jeweils zwei Rastnasen 24a des ersten Dübelteils 10a angeordnet sind. Die Rastnasen 24b des zweiten Dübelteils 10b werden in der Ansicht der Fig. 8 teilweise, nämlich im Bereich ihrer seitlichen Randbegrenzungen, von den Rastnasen 24a des ersten Dübelteils 10a verdeckt. Die Rastnasen 24a sind also noch oberhalb der Rastnasen 24b angeordnet, siehe auch Fig. 9.

Fig. 9 zeigt die Dübelteile 10a, 10b in der Position der Fig. 7 und 8 im geschnittenen Zustand. Es ist zu erkennen, dass die Rastnasen 24a des in Fig. 9 oberen, ersten Dübelteils 10a seitlich auf den Rastnasen 24b des in Fig. 9 unteren Dübelteils 10b aufsitzen. Dadurch sind in der Projektion der Fig. 8 die unteren Rastnasen 24b im Bereich ihrer seitlichen Begrenzungen von den Rastnasen 24a des oberen, ersten Dübelteils 10a verdeckt.

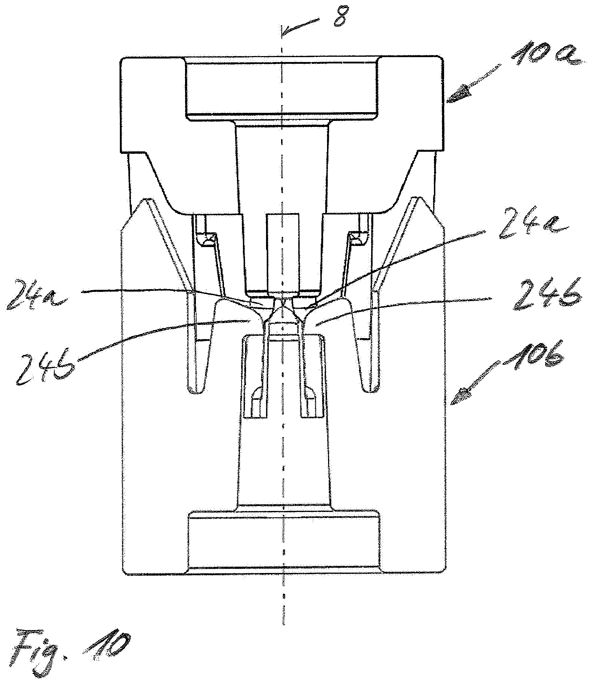

Fig. 10 zeigt die geschnittenen Dübelteile 10a, 10b der Fig. 9 in einer Seitenansicht. Auch hier ist zu erkennen, dass die Rastnasen 24a des in Fig. 10 oberen ersten Dübelteils 10a noch abschnittsweise oberhalb der Rastnasen 24b angeordnet sind und seitlich an den Rastnasen 24b des in Fig. 10 unteren, zweiten Dübelteils 10b anliegen.

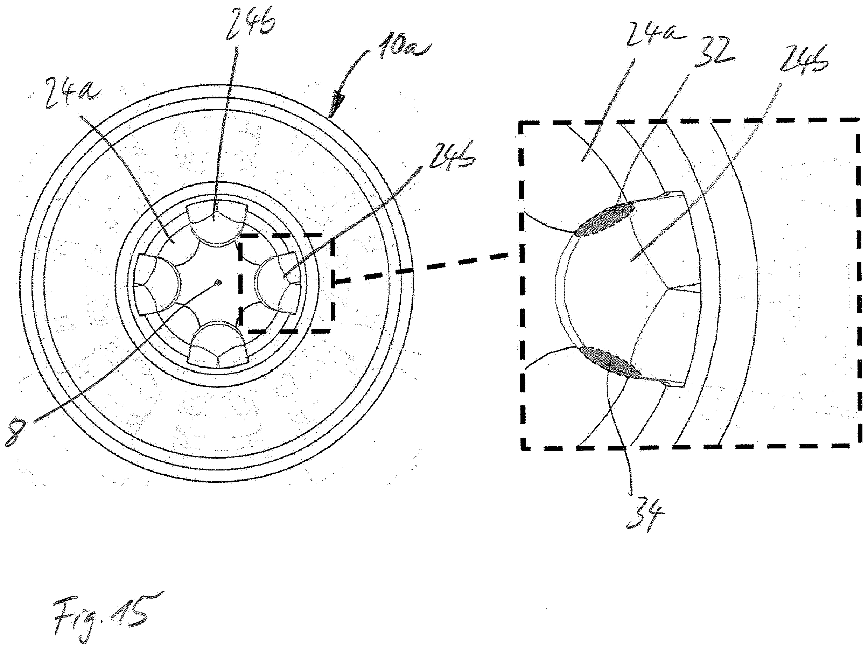

Wird ausgehend von dem Zustand der Fig. 7 bis 10, siehe Fig. 11, eine Kraft auf die beiden Dübelteile 10a, 10b ausgeübt, so dass die beiden Dübelteile 10a, 10b gemäß der Pfeile 30a, 30b aufeinander zubewegt werden, werden die Rastnasen 24a des in Fig. 11 oberen Dübelteils 10a zwischen den Rastnasen 24b des in Fig. 11 unteren Dübelteils 10b hindurchgedrückt. Hierzu müssen die Rastnasen 24a und/oder der Rastnasen 24b ein Stück weit radial nach außen ausweichen. Dies wird durch die federnde Wirkung der Rastarme 22a, 22b ermöglicht. Sobald die Rastnasen 24a des in Fig. 11 oberen Dübelteils 10a an den Rastnasen 24b des unteren Dübelteils 10b vorbeigedrückt worden sind, federn die Rastarme 22a, 22b wieder zurück und die Rastnasen 24a, 24b rasten mit ihren jeweiligen Rastflächen ineinander ein, siehe auch Fig. 15. Wird ausgehend von diesem vollständig ineinander eingesteckten Zustand nun versucht, die beiden Dübelteile 10a, 10b wieder auseinanderzuziehen, wird dies durch die dann mit ihren Rastflächen aneinander anliegenden Rastnasen 24a, 24b verhindert.

Dies ist in der Ansicht der Fig. 12 zu erkennen. Der Blick geht in Fig. 12 von oben parallel zur Mittellängsachse 8 auf das erste Dübelteil 10a. Die Rastnasen 24a des ersten Dübelteils 10a sind nun unterhalb der Rastnasen 24b des zweiten Dübelteils angeordnet und daher teilweise verdeckt. Wie in der Projektion der Fig. 12 zu erkennen ist, überlappen sich die Rastnasen 24a, 24b im Bereich ihrer seitlichen Begrenzungen. Dadurch wird verhindert, dass die beiden Dübelteile 10a, 10b wieder auseinandergezogen werden können.

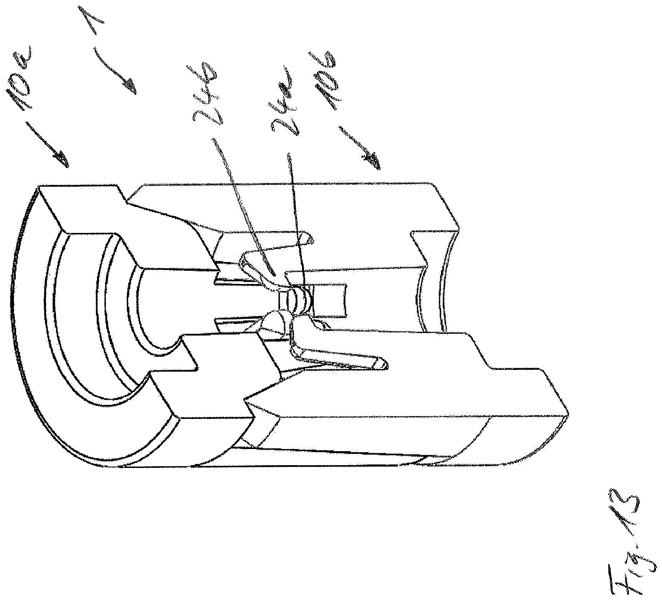

Fig. 13 zeigt die beiden Dübelteile 10a, 10b im Zustand der Fig. 11 in einer Schnittansicht. Zu erkennen ist, dass die Rastnasen 24b des zweiten Dübelteils 10b oberhalb der Rastnasen 24a des ersten Dübelteils 10a angeordnet sind. Wird das Dübelteil 10a ausgehend vom Zustand der Fig. 13 nach oben gezogen, so geht dies nur so weit, bis die in Fig. 13 obenliegenden Rastflächen der Rastnasen 24a an die in Fig. 13 untenliegenden Rastflächen der Rastnasen 24b anschlagen.

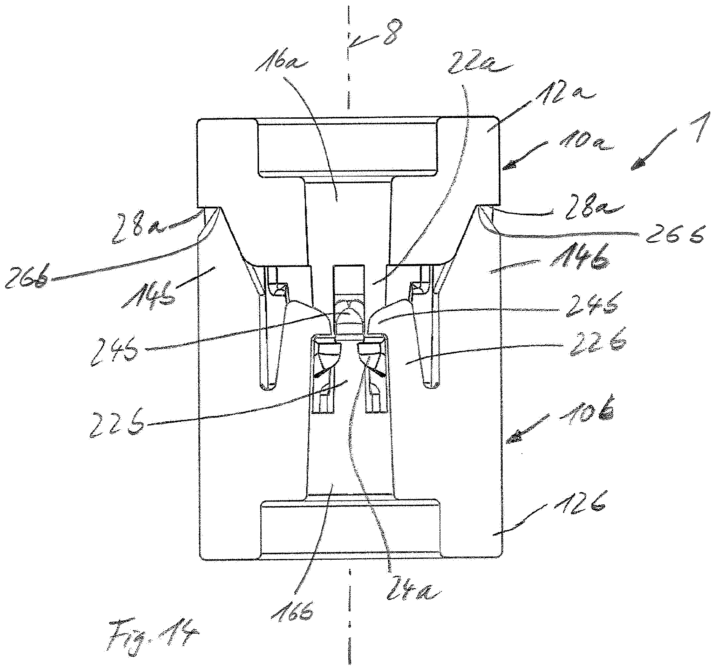

Fig. 14 zeigt die Schnittansicht der Fig. 13 von der Seite. In dieser Darstellung nehmen die beiden Dübelteile 10a, 10b die erste Endposition ein. In dieser ersten Endposition liegen die freien Enden 26bder Finger 14b des zweiten Dübelteils 10b an den Anschlagflächen 28a an der in Fig. 14 unteren Seite des Basisteils 12a des ersten Dübelteils 10a an. Die freien Enden 26b der Finger 14b des zweiten Dübelteils 10b und die Anlageflächen 28a des ersten Dübelteils 10a bilden somit einen Teil der erste Anschlagmittel, die die erste Endposition der beiden Dübelteile 10a, 10b zueinander definieren. In Fig. 14 ist nicht sichtbar, dass in gleicher Weise die freien Enden 26a der Finger 14a des ersten Dübelteils 10a an den Anschlagflächen 28b an dem in Fig. 14 oberen Ende des Basisteils 12b des zweiten Dübelteils 10b anliegen. Auch die freien Enden der Finger 14a des ersten Dübelteils 10a und die Anschlagflächen 28b des zweiten Dübelteils 10b bilden somit einen weiteren Teil der ersten Anschlagmittel zur Definition der ersten Endposition.

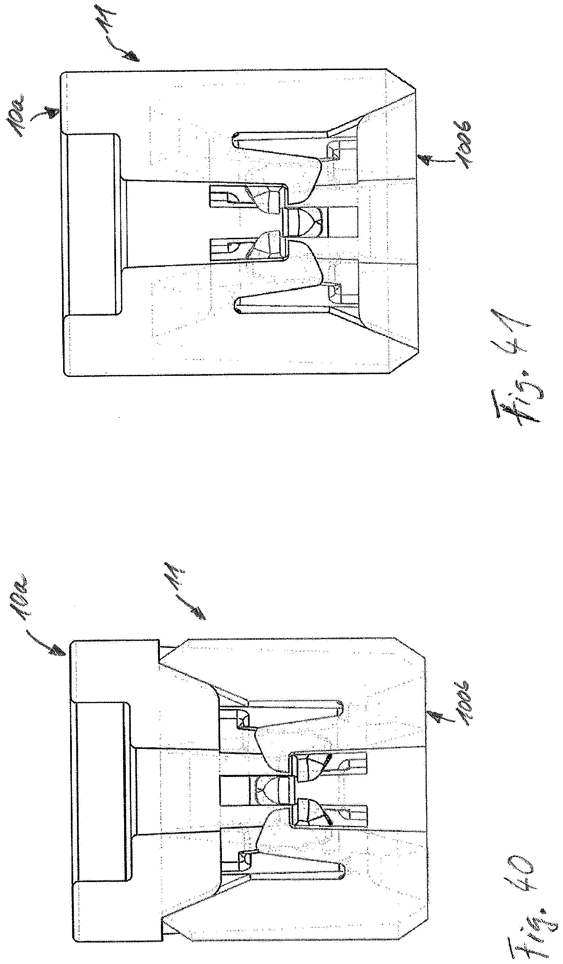

Im Rahmen der Erfindung müssen die beiden Dübelteile 10a, 10b nicht notwendigerweise identisch zueinander ausgebildet sein. Beispielsweise könnten die Anschlagflächen 28b am zweiten Dübelteil 10b entfallen, so dass lediglich die freien Enden der Finger 14b des zweiten Dübelteils 10b und die Anschlagflächen 28a des ersten Dübelteils 10a die ersten Anschlagmittel definieren würden, vergleiche Fig. 40 und 41.

In Fig. 14 ist bereits zu erkennen, dass die senkrecht zur Mittellängsachse 8 angeordneten Rastflächen der Rastnasen 24b und der Rastnasen 24a abschnittsweise einander gegenüberliegen, und zwar gesehen in einer Blickrichtung parallel zur Mittellängsachse 8.

Ausgehend vom Zustand der Fig. 14 können die beiden Dübelteile 10a, 10b ein Stück weit auseinandergezogen werden, entsprechend dem in Fig. 14 sichtbaren Abstand zwischen den obenliegenden Rastflächen der Rastnasen 24a und den untenliegenden Rastflächen der Rastnasen 24b.

Fig. 15 zeigt eine Ansicht des Dübels der Fig. 14 von oben. Der Blick geht also von oben her auf das Dübelteil 10a und die Blickrichtung verläuft parallel zur Mittellängsachse 8. Die Rastnasen 24b verdecken in dieser Ansicht die Rastnasen 24a teilweise. Dies ist anhand der in Fig. 15 rechts angeordneten Ausschnittsvergrößerung zu erkennen. In der Projektion der Fig. 15 überlappt die Rastnase 24b des zweiten Dübelteils 10b mit ihrer Rastfläche die Rastfläche der Rastnase 24a des ersten Dübelteils 10a abschnittsweise in deren Randbereichen. Diese Überlappungsflächen 32, 34sind in der Ausschnittsvergrößerung in Fig. 15 rechts grau hinterlegt dargestellt . Mittels der Überlappungsflächen 32, 34 wird verhindert, dass die Dübelteile 10a, 10b auseinander gezogen werden können, so dass eine Transportsicherung realisiert ist.

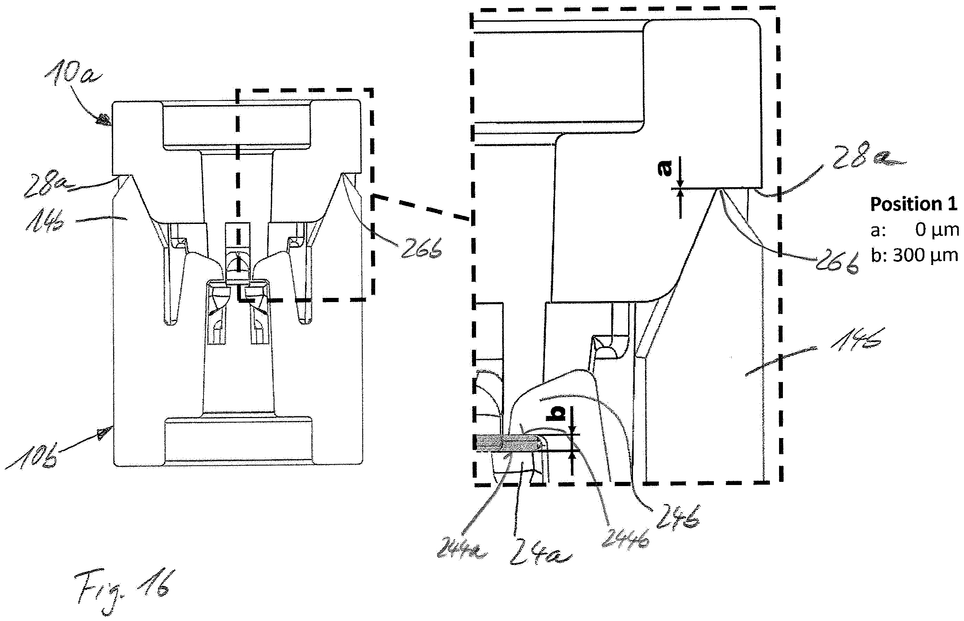

Die Darstellung der Fig. 16 zeigt den Dübel der Fig. 14 in der ersten Endposition. Wie bereits anhand der Fig. 14 erläutert wurde, liegen die freien Enden 26b der Finger 14b des zweiten Dübelteils an den Anschlagflächen 28a des ersten Dübelteils 10a an und definieren dadurch die erste Endposition. In Fig. 16 ist verdeckt, dass in gleicher Weise die freien Enden 26a der Finger 14a des ersten Dübelteils 10a an den Anschlagflächen 28b des zweiten Dübelteils 10b anliegen, da die beiden Dübelteile 10a, 10b ja identisch ausgebildet sind.

In der Detailvergrößerung in Fig. 16 rechts ist dargestellt, dass ein Abstand a zwischen dem freien Ende eines Fingers 14b und der Anschlagfläche 28a gleich null ist.

Ein Abstand b zwischen der Rastfläche 244b der Rastnase 24b und der Rastfläche 244a der Rastnase 24a ist hingegen größer null. Beispielsweise kann dieser Abstand b 300µm betragen. Der Abstand b sollte mindestens so groß, sein wie die doppelte Amplitude einer Ultraschall-Sonotrode, mit der eine Ultraschallschwingung auf die beiden Dübelteile 10a, 10b aufgebracht wird, so dass die Schwingung der Sonotrode effizient für die Erzeugung von Reibungsenergie zwischen den Dübelteilen 10a, 10b genutzt werden kann. Versuche habe ergeben, dass es besonders günstig ist, den Abstand b so groß zu wählen, wie die dreifache Amplitude der Sonotrode. Ein Abstand b von 300 µm würde also besonders vorteilhaft sein bei einer Amplitude der Sonotrode von 100 µm.

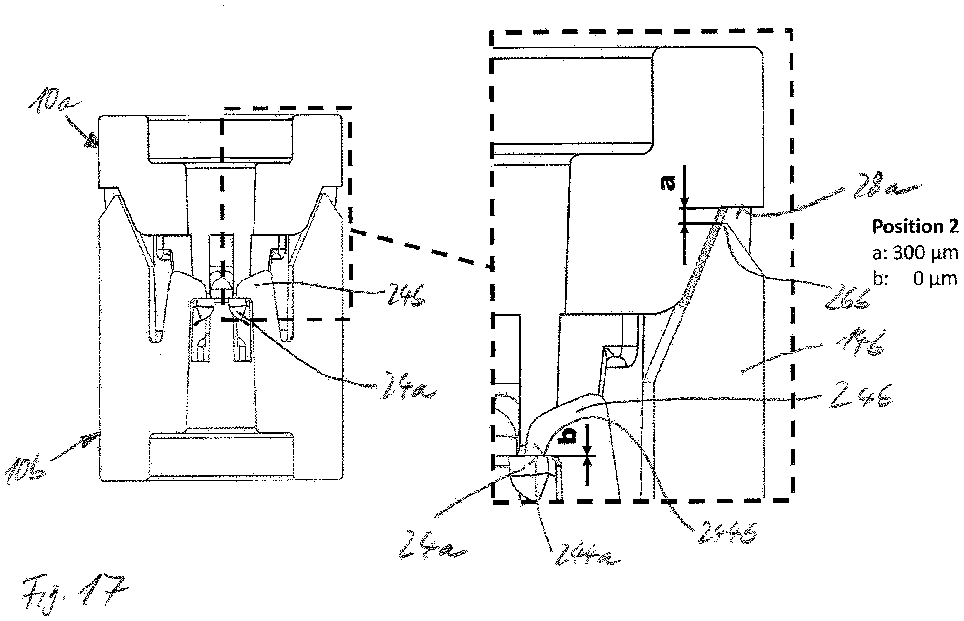

Fig. 17 zeigt die beiden Dübelteile 10a, 10b in der zweiten Endposition, in denen also die Rastflächen 244b, 244a der Rastnasen 24b und 24a aneinander anliegen. Eine weitere Bewegung der beiden Dübelteile 10a, 10b voneinander weg ist dadurch blockiert.

Wie der vergrößerten Einzelheit in Fig. 17 rechts zu entnehmen ist, beträgt in dieser zweiten Endposition der Abstand b zwischen den Rastflächen 244b der Rastnasen 24b und den Rastflächen 244a der Rastnasen 24a null. Ein Abstand zwischen der Dachkante , die das freie Ende 26b des Fingers 14b markiert, und der Anschlagfläche 28a beträgt hingegen a und bei der dargestellten Ausführungsform 300 µm.

Die beiden Dübelteile 10a, 10b können lediglich zwischen den beiden Endpositionen, die in Fig. 16 und Fig. 17 dargestellt sind, relativ zueinander verschoben werden. Bei der in den Fig. 16 und 17 dargestellten Ausführungsform beträgt der Verschiebeweg zwischen den beiden Endpositionen also 300 µm.

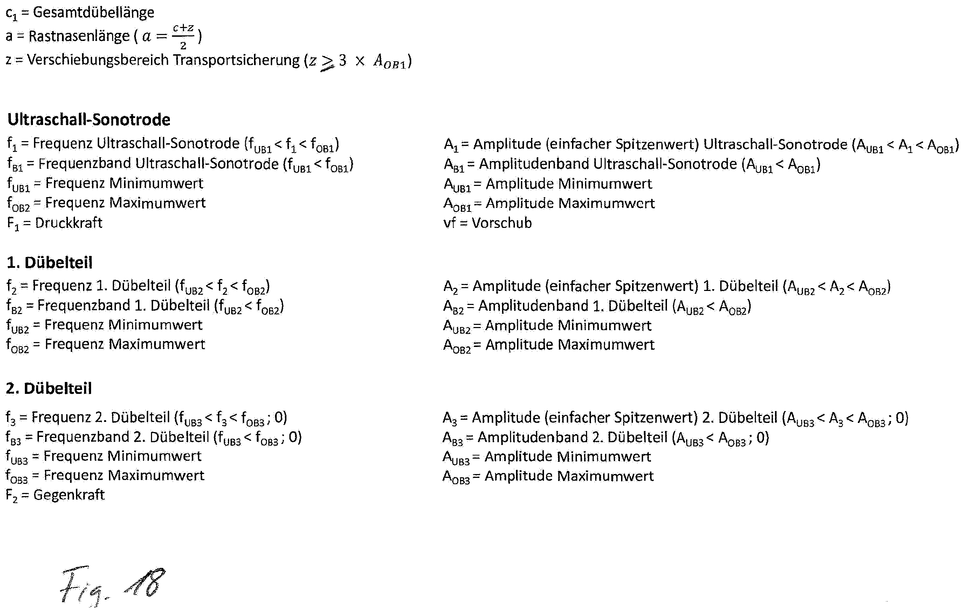

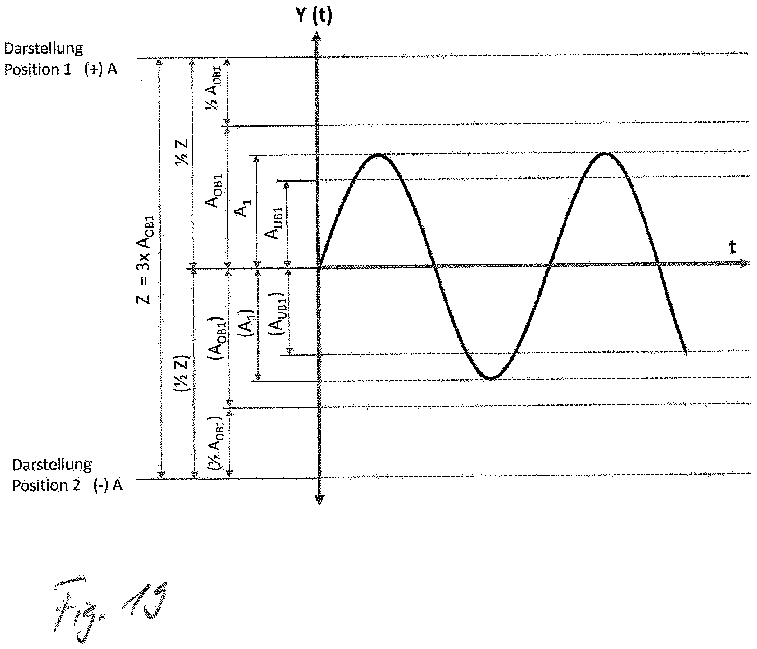

Fig. 18 enthält Begriffserläuterungen und Begriffsdefinitionen, die zur Erläuterung der Fig. 19 bis 22 dienen. Erfindungsgemäß wird ein Verschiebeweg z zwischen der ersten Endposition und der zweiten Endposition der Dübelteile zueinander größer oder gleich gewählt zu dem dreifachen Maximalwert A_{OB1} der Amplitude der Ultraschall-Sonotrode.

Fig. 19 zeigt schematisch und über der Zeit aufgetragen eine Auslenkung einer Ultraschall-Sonotrode zur Beaufschlagung des erfindungsgemäßen Dübels. Die Auslenkung folgt einer Sinuskurve und pendelt zwischen dem positiven Spitzenwert A1 der Amplitude und dem negativen Spitzenwert A1 der Amplitude. Diese Auslenkung in Form einer Sinusschwingung wird auf den erfindungsgemäßen Dübel übertragen, um Ultraschallenergie in den Dübel einzuleiten und an den Kontaktstellen der beiden Dübelteile 10a, 10b zueinander, an den Kontaktstellen des ersten Dübelteils 10a mit der Leichtbauplatte und/oder an den Kontaktstellen des zweiten Dübelteils 10b mit der Leichtbauplatte das thermoplastische Material der Dübelteile 10a, 10b zu erwärmen, zu plastifizieren und gegebenenfalls zu verflüssigen. Das thermoplastische Material kann dann gegebenenfalls in das Material der Leichtbauplatte eindringen und dadurch eine stoffschlüssige und/oder formschlüssige Verbindung zwischen dem erfindungsgemäßen Dübel und der Leichtbauplatte und/oder zwischen den beiden Dübelteilen 10a, 10b bewirken. Letztendlich wird dadurch eine sichere Verankerung des erfindungsgemäßen Dübels in der Leichtbauplatte erzielt. In Fig. 19 ist auch die gemäß der Erfindung besonders vorteilhafte Bemessung des Verschiebewegs z eingetragen, die das Dreifache des Maximalwerts A_{OB1} der Ultraschall-Sonotrode beträgt.

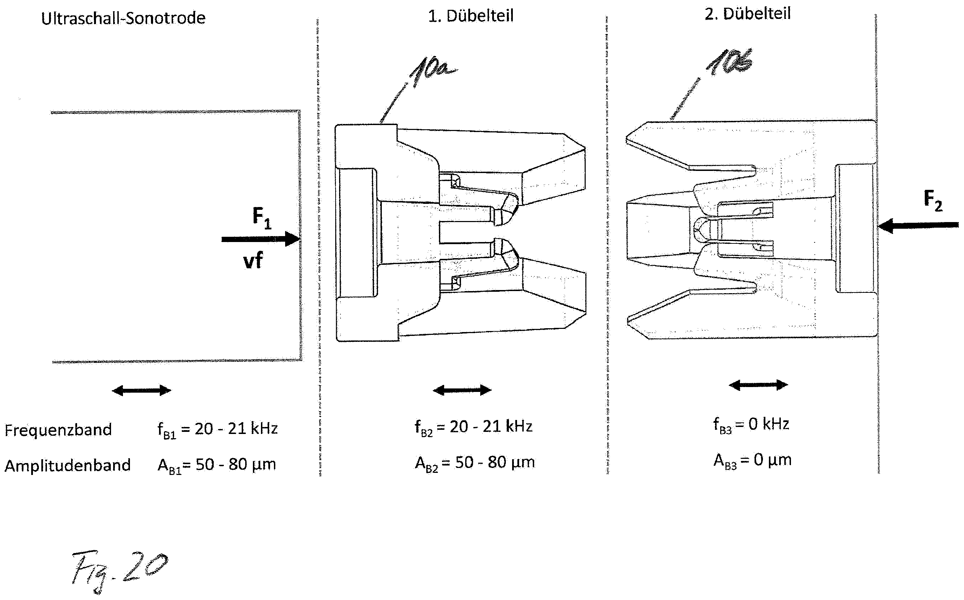

Fig. 20 zeigt eine schematische Darstellung der Ultraschall-Sonotrode sowie des ersten Dübelteils 10a und des zweiten Dübelteils 10b im auseinandergezogenen Zustand. Die Ultraschall-Sonotrode schwingt bei der dargestellten Ausführungsform mit einer Frequenz, die in einem Frequenzband zwischen 20 und 21 kHz liegt. Eine Spitzenamplitude der Schwingung der Ultraschall-Sonotrode liegt in einem Amplitudenband zwischen 50 µm und 80 µm.

Würde die Ultraschall-Sonotrode das erste Dübelteil 10a berühren, so würde das erste Dübelteil 10a ebenfalls mit einer Frequenz in einem Frequenzband zwischen 20 kHz und 21 kHz schwingen und die Spitzenamplitude der Schwingung des ersten Dübelteils 10a würde ebenfalls in einem Amplitudenband zwischen 50 µm und 80 µm liegen, da - vereinfacht - davon ausgegangen wird, dass die Übertragung der Schwingung von der Ultraschall-Sonotrode auf das erste Dübelteil 10a verlustfrei erfolgt.

Das zweite Dübelteil 10b liegt mit seiner in Fig. 20 rechts dargestellten Unterseite hingegen entweder auf einem Gegenhalter oder am Grund eines Sacklochs in der Leichtbauplatte auf, wobei die Leichtbauplatte wiederum auf einer starren Unterlage angeordnet ist. Das zweite Dübelteil 10b würde somit nicht schwingen.

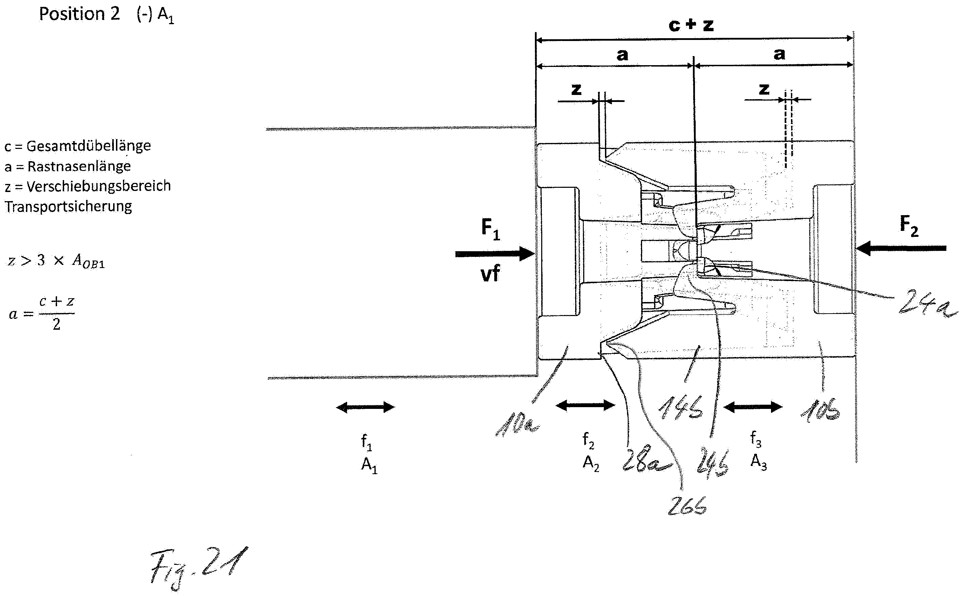

Fig. 21 zeigt die beiden Dübelteile 10a, 10b im vollständig zusammengesteckten Zustand und in der zweiten Endposition. Die freien Enden 26b der Finger 14b des zweiten Dübelteils 10b sind im Abstand von den Anschlagflächen 28a des ersten Dübelteils 10a angeordnet. Die Rastflächen der Rastnasen 24b liegen an den Rastflächen der Rastnasen 24a an.

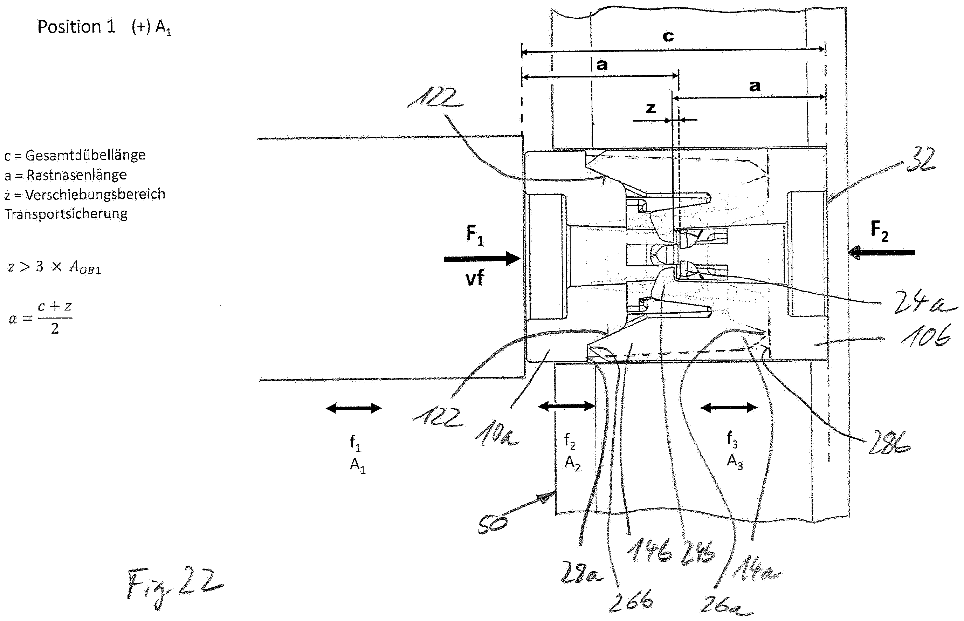

Fig. 22 zeigt die beiden Dübelteile 10a, 10b, die ausgehend von dem in Fig. 21 dargestellten Zustand nun in der ersten Endposition zueinander angeordnet sind. In dieser ersten Endposition liegen die freien Enden 26b der Finger 14b des zweiten Dübelteils 10b an den Anschlagflächen 28a des ersten Dübelteils 10a an. Gleichzeitig liegen, was in Fig. 22 gestrichelt dargestellt ist, die freien Enden 26a der Finger 14a des ersten Dübelteils 10a an den Anschlagflächen 28b des zweiten Dübelteils 10b an. Die Rastflächen der Rastnasen 24b sind von den Rastflächen der Rastnasen 24a beabstandet.

Fig. 22 zeigt auch, dass der Dübel in ein vorbereitetes Sackloch in einer Leichtbauplatte 50 eingeschoben wurde, so dass das zweite Dübelteil 10b mit der in Fig. 22 rechts dargestellten Oberseite des Basisteils am Grund 32 des Sacklochs in der Leichtbauplatte 50 anliegt. Der Grund 32 des Sacklochs ist bei der dargestellten Ausführungsform innerhalb der unteren Deckschicht der Leichtbauplatte angeordnet. Im Rahmen der Erfindung kann der Grund 32 des Sacklochs aber innerhalb der Kernschicht, auf der Oberfläche der Deckschicht oder, wie in Fig. 22 dargestellt, innerhalb der Deckschicht angeordnet sein.

Ausgehend von dem in Fig. 22 dargestellten Zustand wird die Ultraschall-Sonotrode mit einer Kraft F1 in Richtung auf den Grund 32 des Sacklochs in der Leichtbauplatte gedrückt. Die Leichtbauplatte wird mit einer Gegenkraft F2 in der dargestellten Position gehalten. Die Ultraschall-Schwingung der Ultraschall-Sonotrode wird somit auf das erste Dübelteil 10a übertragen, wohingegen das zweite Dübelteil 10b im Wesentlichen in Ruhe bleibt, da es ja am Grund 32 der Leichtbauplatte anliegt. Im Bereich der freien Enden 26b der Finger 14b und der Anschlagflächen 28a sowie an den freien Enden 26a der Finger 14a und im Bereich der Anschlagflächen 28b kommt es somit zu einer starken Erwärmung des thermoplastischen Materials, aus dem zumindest die Finger 14a, 14b der Dübelteile 10a, 10b bestehen. Die freien Enden 26a, 26b der Finger 14a, 14b erwärmen sich somit stark, und zwar stärker als die Anschlagflächen 28a, 28b, da das Volumen der freien Enden 26a, 26b der Finger 14a, 14b kleiner ist als das hinter den Anschlagflächen 28a, 28b liegende Volumen des Basisteils der Dübelteile 10a, 10b. Vorrangig werden infolgedessen die freien Enden der Finger 14a, 14b aufschmelzen und infolgedessen kann das erste Dübelteil 10a mit dem Vorschub VF der Ultraschallsonotrode in Richtung auf den Grund 32 des Sacklochs in der Leichtbauplatte 50 gedrückt werden. Das aufschmelzende Material von den freien Enden der Finger 14a, 14b wird infolgedessen radial nach außen ausweichen und sich ein Stück weit in die Kernschicht der Leichtbauplatte hinein ausbreiten. Dies auch deshalb, da die radial innenliegenden Schrägflächen der Finger 14a, 14b an Schrägflächen 122 der Basisteile der Dübelteile 10a, 10b anliegen und die Finger 14a, 14b beim Aufeinanderzubewegen der Dübelteile 10a, 10b somit im Bereich ihrer freien Enden 26a, 26b radial nach außen gedrückt werden. Dadurch wird der erfindungsgemäße Dübel 1 auch in der Kernschicht der Leichtbauplatte 50 verspreizt. Ist das erste Dübelteil 10a so weit in Richtung auf den Grund 32 des Sacklochs in der Leichtbauplatte 50 gedrückt, bis die in Fig. 22 links dargestellte Oberseite des ersten Dübelteils 10a bündig ist mit der in Fig. 22 links dargestellten Oberseite der linken Deckschicht der Leichtbauplatte 50, wird der Vorschub VF der Ultraschall-Sonotrode gestoppt und auch die Einleitung von Ultraschallenergie wird gestoppt. Infolgedessen wird das erweichte bzw. verflüssigte Material der Dübelteile 10a, 10b erkalten und infolgedessen auch verfestigen. Nach dem vollständigen Erkalten sind dadurch die beiden Dübelteile 10a, 10b stoffschlüssig und/oder formschlüssig miteinander verbunden und vor allem auch sind die beiden Dübelteile 10a, 10b stoffschlüssig und/oder formschlüssig mit der Leichtbauplatte 50 verbunden.

Bei der dargestellten Ausführungsform ist die Tiefe des Sacklochs und sind die Abmessungen der beiden Dübelteile 10a, 10b so gewählt, dass das verflüssigte Material der freien Enden der Finger 14a, 14b hauptsächlich im Bereich der Kernschicht der Leichtbauplatte 50 austritt. Bei der dargestellten Ausführungsform erfolgt eine Verankerung des Dübels 1 also hauptsächlich im Bereich der Kernschicht. Dies kann vorteilhaft sein, wenn beispielsweise die beiden Deckschichten der Leichtbauplatte 50 sehr dünn oder auch aus nicht porösem Material bestehen.

Vor allem ist der erfindungsgemäße Dübel 1 bei Leichtbauplatten 50 mit druckempfindlichen oder temperaturempfindlichen Deckschichten äußerst vorteilhaft. Denn die Erwärmung der beiden Dübelteile 10a, 10b findet hauptsächlich im Bereich der freien Enden 26a, 26b der Finger 14a, 14b und damit beabstandet von der in Fig. 22 rechts dargestellten Außenseite der in Fig. 22 rechts liegenden Deckschicht statt. Diese Deckschicht wird infolgedessen nur schwach erwärmt, so dass keine Markierungen nach Abschluss des Fixiervorgangs des erfindungsgemäßen Dübels 1 zu befürchten sind.

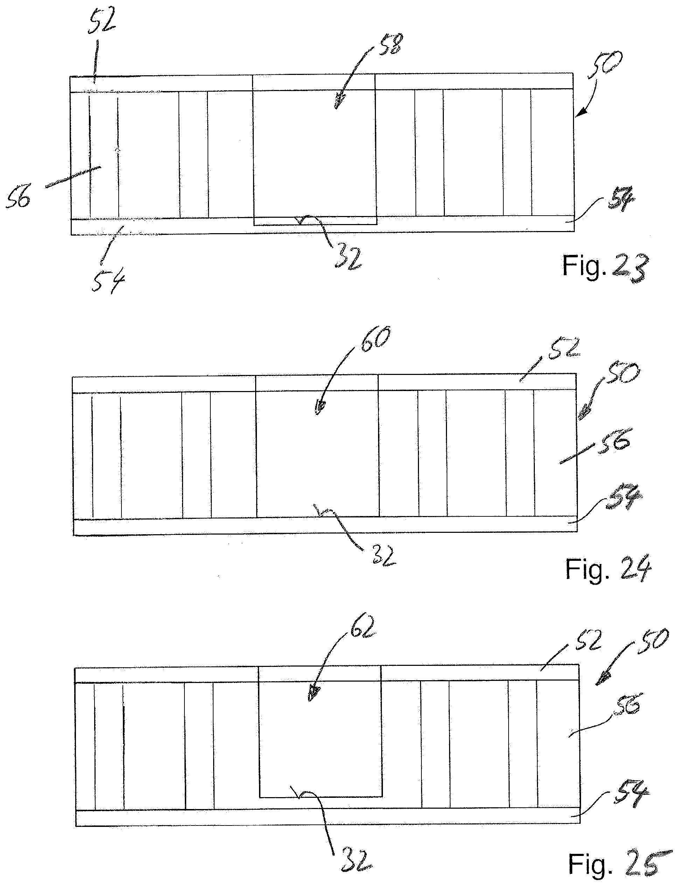

Die Fig. 23 bis 25 zeigen verschiedene Ausführungsformen eines Sacklochs in einer Leichtbauplatte. Fig. 23 zeigt eine Leichtbauplatte 50 mit einer ersten, in Fig. 23 oben dargestellten Deckschicht 52 und einer zweiten, in Fig. 23 unten dargestellten Deckschicht 54. Zwischen den beiden Deckschichten ist eine Kernschicht 56 angeordnet, die eine gegenüber den Deckschichten 52, 54 geringere Dichte aufweist. Beispielsweise besteht die Kernschicht 56 aus Vollholz geringer Dichte, beispielsweise Balsaholz. Ein Sackloch 58 zur Anordnung des erfindungsgemäßen Dübels ist so in die Leichtbauplatte 50 eingebracht worden, dass der Grund 32 des Sacklochs 58 etwa auf halber Höhe der in Fig. 23 unten dargestellten Deckschicht 54 liegt.

Fig. 24 zeigt die Leichtbauplatte 50 mit den beiden Deckschichten 52 und 54 sowie der Kernschicht 56, bei der ein Sackloch 60 so eingebracht wurde, dass der Grund 32 des Sacklochs auf der in Fig. 24 obenliegenden Innenseite der unteren Deckschicht 54 angeordnet ist.

Fig. 25 zeigt die Leichtbauplatte 50 mit einem Sackloch 62, dessen Grund 32 noch innerhalb der Kernschicht 56 und damit oberhalb der in Fig. 25 unten dargestellten Deckschicht 54 angeordnet ist.

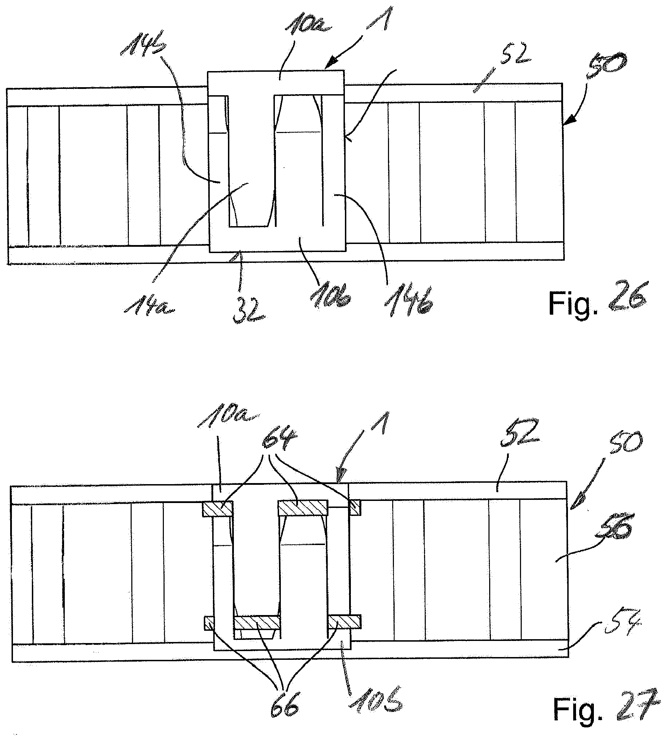

Fig. 26 zeigt eine schematische Schnittansicht der Leichtbauplatte 50, wobei das Sackloch gemäß der anhand der Fig. 23 erläuterten Ausführungsform angeordnet wurde. Der erfindungsgemäße Dübel 1 mit den Dübelteilen 10a, 10b wurde so weit in das Sackloch eingeführt, bis die Unterseite des in Fig. 26 unteren, zweiten Dübelteils 10b auf dem Grund 32 des Sacklochs aufsitzt. Die Oberseite des in Fig. 26 oben dargestellten ersten Dübelteils 10a ragt noch über die Außenseite der in Fig. 26 oberen Deckschicht 52 hinaus. Die freien Enden der Finger 14b des zweiten Dübelteils 10b liegen an den Anschlagflächen des ersten Dübelteils 10a an und die freien Enden der Finger 14a des ersten Dübelteils 10a liegen an den Anschlagflächen des zweiten Dübelteils 10b an.

Ausgehend von dem in Fig. 26 dargestellten Zustand wird, vgl. auch Fig. 22, das erste Dübelteil 10a mit Ultraschallenergie mittels der Ultraschall-Sonotrode beaufschlagt. Das Material der Finger 14a, 14b verflüssigt sich im Bereich der jeweiligen freien Enden und tritt ein Stück weit in die Kernschicht 56 der Leichtbauplatte 50 ein. Gleichzeitig werden die Dübelteile 10a, 10b aufeinander zu bewegt, indem das erste Dübelteil 10a weiter in das Sackloch hineingedrückt wird. Dadurch werden die Finger 14a, 14b radial nach außen gespreizt, so dass die Finger 14a, 14b mechanisch an der Kernschicht 56 verankert werden. Wenn die Oberseite des ersten Dübelteils 10a bündig ist mit der Oberseite der in Fig. 27 oben dargestellten Deckschicht 52, wird der Vorschub der Sonotrode gestoppt und auch die Beaufschlagung des ersten Dübelteils 10a mit Ultraschallenergie wird gestoppt. In der Folge erkaltet das in die Kernschicht 56 eingedrungene verflüssigte Material der Dübelteile 10a, 10b und bildet verfestigte Bereiche 64 und 66 aus. Die Bereiche 64 liegen, wie Fig. 27 zu entnehmen ist, unterhalb der Deckschicht 52, berühren jedoch die in Fig. 27 unten dargestellte Innenseite der Deckschicht 52. Die Bereiche 64 erstrecken sich auch ein Stück weit in radialer Richtung aus dem Sackloch hinaus in das Material der Kernschicht 56 hinein. Mittels der Bereiche 64 wird somit der erfindungsgemäße Dübel mittels eines Formschlusses mit der in Fig. 27 oberen Deckschicht 52 gegen Ausziehen aus der Leichtbauplatte 50 nach oben gesichert. Darüber hinaus werden durch einen Stoffschluss die beiden Dübelteile 10a, 10b aneinander fixiert. Schließlich wird der erfindungsgemäße Dübel auch stoffschlüssig mit dem Material der Kernschicht 56 und der Unterseite der oberen Deckschicht 52 verbunden.

Die Bereiche 66 sind oberhalb der Oberseite der in Fig. 27 unten dargestellten Deckschicht 54 angeordnet. Mittels der Bereiche 66 werden die beiden Dübelteile 10a, 10b stoffschlüssig aneinander gesichert. Die Bereiche 66 erstrecken sich in radialer Richtung auch ein Stück weit in das Material der Kernschicht 56 hinein. Mittels der Bereiche 66 ist der erfindungsgemäße Dübel somit stoffschlüssig und formschlüssig an der Kernschicht 56 gesichert.

Durch Aufspreizen der Finger 14a, 14b ist der Dübel 1 auch mechanisch an der Kernschicht 56 gesichert.

Es ist in Fig. 27 zu erkennen, dass die Bereiche 66 nicht an der in Fig. 27 unteren Deckschicht 54 anliegen. Die untere Deckschicht 54 erwärmt sich infolgedessen beim Fixieren des erfindungsgemäßen Dübels 1 nur schwach. Dadurch kann der erfindungsgemäße Dübel 1 prozesssicher auch in Leichtbauplatten 50 mit temperaturempfindlichen und/oder druckempfindlichen Deckschichten 52, 54 eingesetzt werden, ohne dass Markierungen im Bereich des erfindungsgemäßen Dübels 1 in der unteren Deckschicht 54 zu befürchten sind.

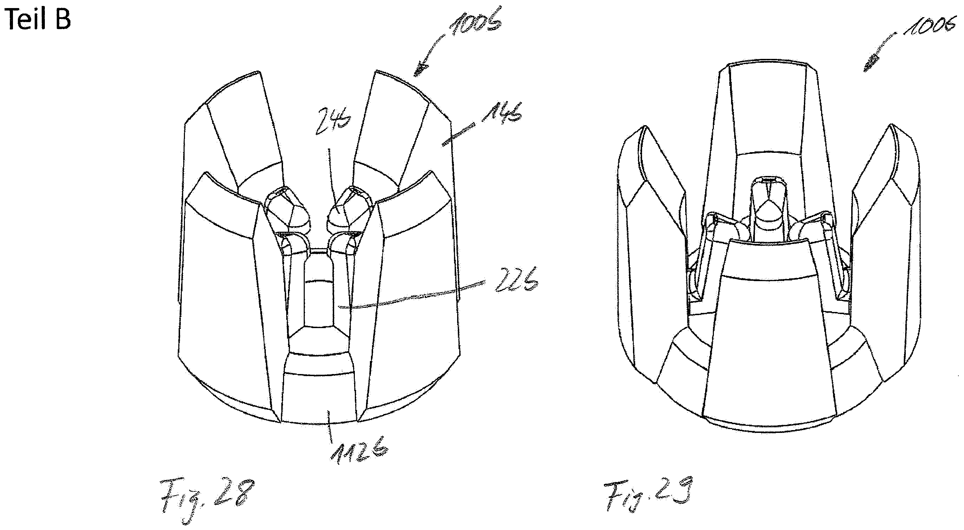

Die Darstellung der Fig. 28 zeigt ein zweites Dübelteil 100b gemäß einer zweiten Ausführungsform der Erfindung. Das zweite Dübelteil 100b ist sehr ähnlich zum zweiten Dübelteil 10b der Fig. 2 ausgebildet, so dass lediglich die Unterschiede zwischen den Dübelteilen 10b und 100b erläutert werden.

Beim Dübelteil 100b ist das Basisteil 112b mit kleinerem Radius ausgeführt. Das Basisteil 112b weist infolgedessen keine Anschlagflächen für die freien Enden der Finger eines ersten Dübelteils auf. Die Finger 14b und die Rastnasen 24b sowie die Rastarme 22b des Dübelteils 100b sind hingegen identisch ausgebildet wie beim Dübelteil 10b. Das Dübelteil 100b weist gegenüber dem Dübelteil 10b eine geringere Höhe auf. Dies wurde dadurch erreicht, dass der Ringabschnitt des Basisteils 12b vollständig entfallen ist.

Fig. 29 zeigt das Dübelteil 100b der Fig. 28 in einer gegenüber der Fig. 28 um 45° um die Mittellängsachse gedrehten Position.

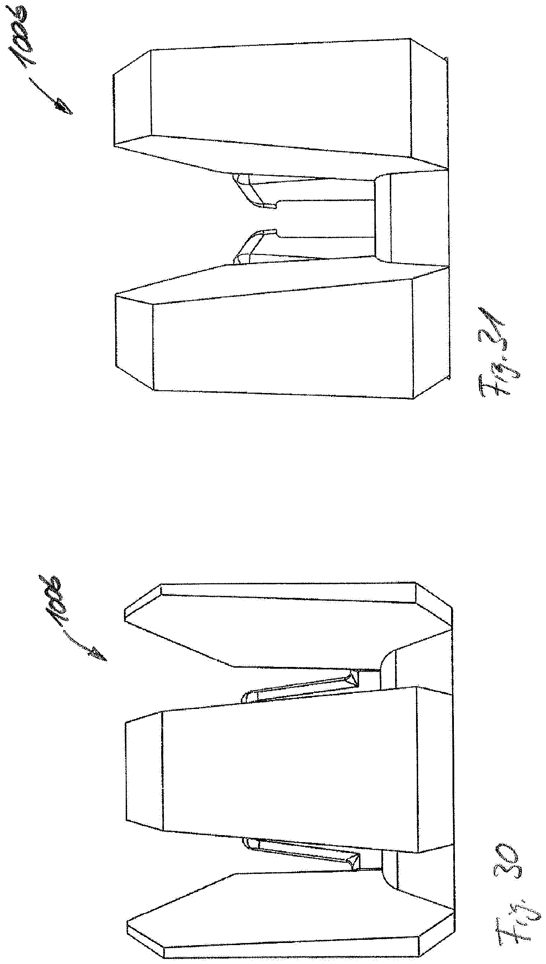

Fig. 30 zeigt das Dübelteil 100b der Fig. 28 in einer Seitenansicht. Anhand eines Vergleichs der Fig. 6 und 30 ist zu erkennen, dass die geringere Höhe des Dübelteils 100b gegenüber dem Dübelteil 10b durch Weglassen des ringförmigen, zylindrischen Abschnitts des Basisteils 12b erzielt wurde.

Fig. 31 zeigt das Dübelteil 100b der Fig. 30 in einer um 45° um die Mittellängsachse 8 gedrehten Position.

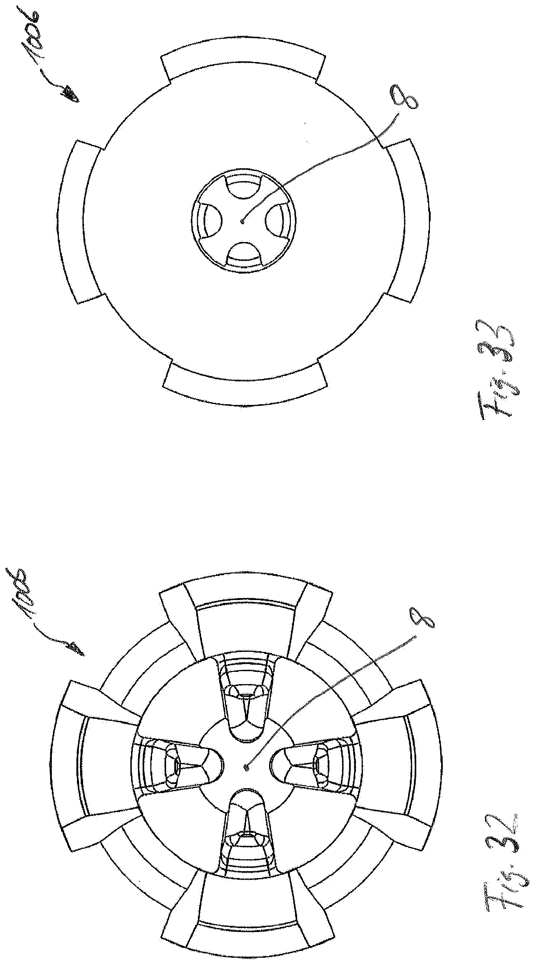

Fig. 32 zeigt das Dübelteil der Fig. 30 in einer Ansicht von oben.

Fig. 33 zeigt das Dübelteil 100b der Fig. 30 in einer Ansicht von unten.

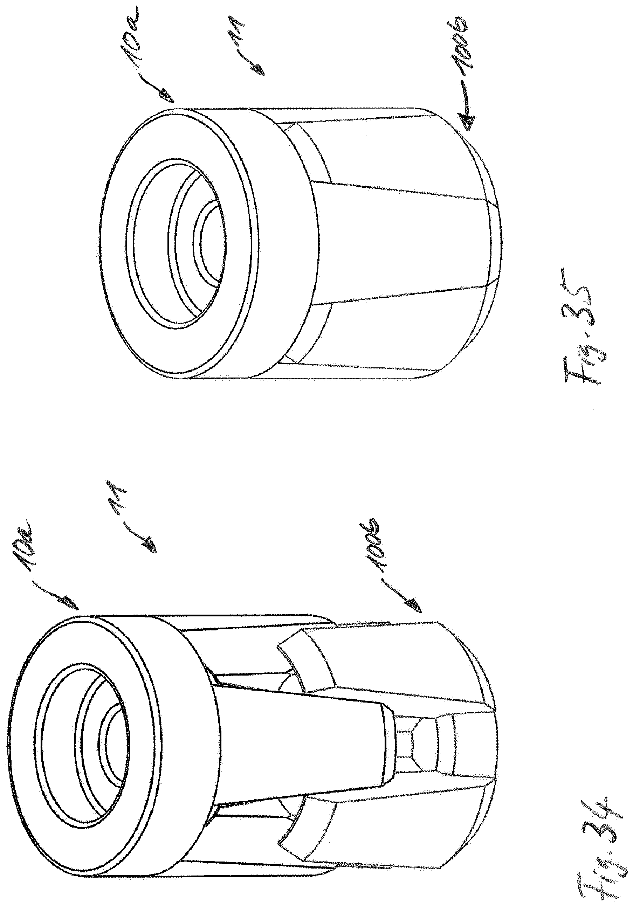

Fig. 34 zeigt das erste Dübelteil 10a der Fig. 1 im teilweise oder ein Stück weit und lose zusammengesteckten Zustand mit dem zweiten Dübelteil 100b gemäß Fig. 28. Werden ausgehend vom Zustand der Fig. 34 die beiden Dübelteile 10a, 100b aufeinander zubewegt, werden die Rastnasen 24a, 24b der beiden Dübelteile 10a, 100b zunächst radial ein Stück weit nach außen ausgelenkt, wie dies bereits anhand der beiden Dübelteile 10a, 10b erläutert wurde. Sobald die Rastflächen der Rastnasen 24a, 24b aneinander vorbeibewegt wurden, federn die Rastnasen 24a, 24b wieder nach innen. Die beiden Dübelteile 10a, 100b befinden sich dann im vollständig zusammengesteckten Zustand, der in Fig. 35 dargestellt ist.

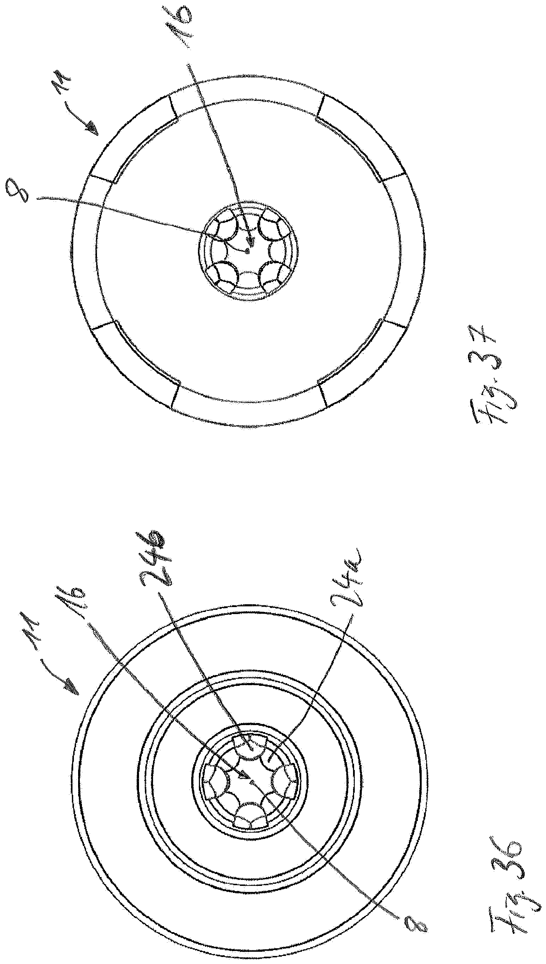

Die Darstellung der Fig. 36 zeigt den erfindungsgemäßen Dübel gemäß Fig. 34 in einer Ansicht von oben. Blick geht in Fig. 35 in den Schraubkanal 16 des Dübels, der wie bei den Dübelteilen 10a, 10b abschnittsweise durch die radial innenliegenden Flächen der Rastnasen 24a, 24b definiert ist und der die Mittellängsachse 8 umgibt. Die Blickrichtung in Fig. 36 ist parallel zur Mittellängsachse 8.

Fig. 37 zeigt den Dübel der Fig. 35 in einer Ansicht von unten. Wieder geht der Blick in den Schraubkanal 16 parallel zur Mittellängsachse 8 hinein.

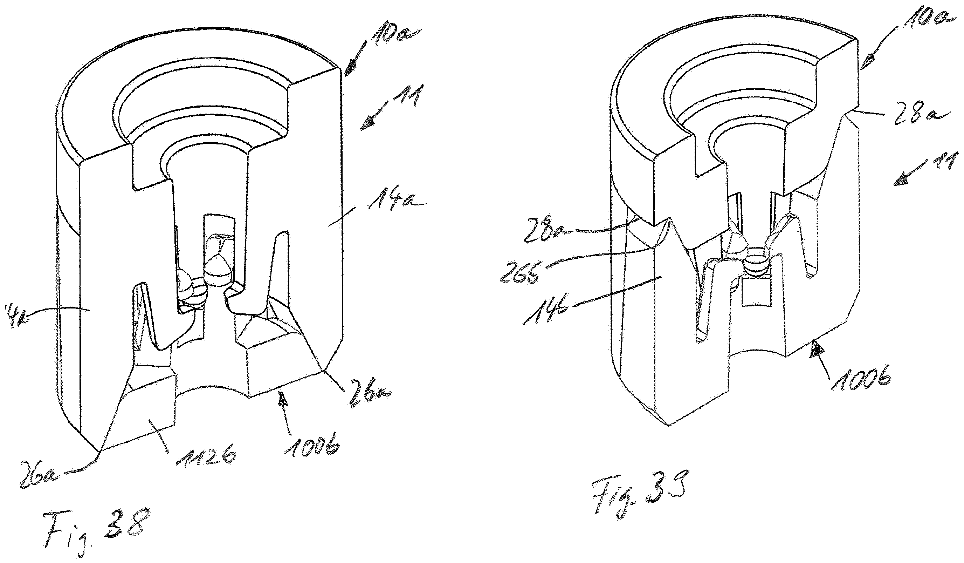

Fig. 38 zeigt den Dübel der Fig. 35 in einer ersten Schnittansicht.

Es ist in dieser Ansicht zu erkennen, dass die freien Enden 26a der Finger 14a des ersten Dübelteils 10a und somit die Dachkante der Finger 14a freiliegt. Wird das erste Dübelteil 10a in Richtung auf das zweite Dübelteil 100b geschoben und gleichzeitig mit Ultraschallenergie beaufschlagt, liegen die Dachkanten beziehungsweise die freien Enden 26a der Finger 14a am Grund des Sacklochs an. Das Material im Bereich der freien Enden der Finger 14a wird dadurch verflüssigt, gleichzeitig durch den dachförmigen Querschnitt der freien Enden der Finger 14a und der hierzu passenden Außenschräge des Basisteils 112b des zweiten Dübelteils 100b radial nach außen abgelenkt. Die Ultraschallenergie wird von den freien Enden der Finger 14a somit auf die Leichtbauplatte, beispielsweise auf die untere Deckschicht der Leichtbauplatte, übertragen.

Fig. 39 zeigt den Dübel der Fig. 34 in einer Schnittansicht, wobei die Schnittebene anders liegt als in Fig. 37. Es ist in dieser Ansicht zu erkennen, dass die freien Enden 26bder Finger 14b des zweiten Dübelteils 100b an den Anschlagflächen 28a des ersten Dübelteils 10a anliegen und somit die erste Endposition der beiden Dübelteile 10a, 100b zueinander definieren.

Fig. 40 zeigt die Schnittansicht der Fig. 39 von der Seite.

Fig. 41 zeigt die Schnittansicht der Fig. 38 von der Seite.

## Patentansprüche

1. Dübel (1; 11) zur Anordnung in Leichtbauplatten (50), wobei eine Leichtbauplatte (50) eine erste Deckschicht (52) und eine zweite Deckschicht (54) aus kompaktem drucksteifen Material und eine zwischen den Deckschichten angeordnete Kernschicht aus Material mit gegenüber den Deckschichten (52; 54) geringer Dichte aufweist, insbesondere Papierwaben, Schaumstoff oder Vollholz mit geringer Dichte, mit einem ersten Dübelteil (10a) und einem zweiten Dübelteil (101, 100b), wobei das erste und das zweite Dübelteil (10a, 10b, 100b) relativ zueinander verschiebbar ausgebildet sind, **dadurch gekennzeichnet, dass** ein Verschiebeweg (Z) zwischen einer ersten Endposition und einer zweiten Endposition zum Bereitstellen einer Transportsicherung begrenzt ist, wobei die erste Endposition mittels erster Anschlagmittel am ersten und zweiten Dübelteil und die zweite Endposition mittels zweiter Anschlagmittel am ersten und zweiten Dübelteil definiert ist.

2. Dübel nach Anspruch 1, **dadurch gekennzeichnet, dass** die erste Endposition und die zweite Endposition einen Verschiebeweg (Z) zwischen 100 Mikrometern und 1000 Mikrometern, insbesondere zwischen 150 Mikrometern und 240 Mikrometern, definieren.

3. Dübel nach Anspruch 1 oder 2, **dadurch gekennzeichnet, dass** die erste Endposition und die zweite Endposition einen Verschiebeweg (Z) definieren, der zwischen dem zweifachen und dem vierfachen der Amplitude einer für die Ultraschallbeaufschlagung des Dübels (1; 11) verwendeten Ultraschall-Sonotrode liegt, insbesondere das dreifache der Amplitude der Sonotrode beträgt.

4. Dübel nach wenigstens einem der vorstehenden Ansprüche, **dadurch gekennzeichnet, dass** das erste Dübelteil (10a) und das zweite Dübelteil (10b, 100b) jeweils wenigstens zwei sich parallel zu einer Längsrichtung des Dübels (1; 11) erstreckende Finger (14a, 14b) aufweisen, wobei die Finger (14a) des ersten Dübelteils (10a) und die Finger (14b) des zweiten Dübelteils (10b, 100b) im zusammengesteckten Zustand des ersten und des zweiten Dübelteils (10a, 10b, 100b) mindestens abschnittsweise ineinander greifen, und dass die ersten Anschlagmittel, die die erste Endposition definieren, mittels wenigstens eines der Finger (14a, 14b) eines der Dübelteile (10a, 10b, 100b) realisiert sind, der mit seinem freien Ende an einem gegenüberliegenden Element des jeweils anderen Dübelteils (10a, 10b, 100b) anliegt.

5. Dübel nach wenigstens einem der vorstehenden Ansprüche, **dadurch gekennzeichnet, dass** die zweiten Anschlagmittel, die die zweite Endposition definieren, mittels Rastelementen (18a, 18b) an den beiden Dübelteilen (10a, 10b, 100b) realisiert sind.

6. Dübel nach wenigstens einem der vorstehenden Ansprüche, **dadurch gekennzeichnet, dass** die Rastelemente (18a, 18b) wenigstens teilweise radial nach innen, in Richtung auf eine Mittellängsachse 8 des Dübelteils (10a, 10b, 100b) zu, vorragende Rastnasen (24a, 24b) aufweisen.

7. Dübel nach Anspruch 6, **dadurch gekennzeichnet, dass** jeweils eine Rastnase (24a, 24b) an einem sich im Wesentlichen parallel zur Mittellängsachse (8) des Dübelteils (10a, 10b, 100b) erstreckenden Rastarm angeordnet ist.

8. Dübel nach Anspruch 6 oder 7, **dadurch gekennzeichnet, dass** die Rastnasen(24a, 24b), in einer Richtung parallel zur Mittellängsachse (8) des Dübelteils (10a, 10b, 100b) gesehen, eine abgerundete Form aufweisen.

9. Dübel nach Anspruch 6, 7 oder 8, **dadurch gekennzeichnet, dass** die Rastnasen (24a, 24b), in einer Richtung senkrecht zur Mittellängsachse (8) gesehen, jeweils wenigstens eine Anlaufschräge aufweisen.

10. Dübel nach wenigstens einem der vorstehenden Ansprüche 6 bis 9, **dadurch gekennzeichnet, dass** wenigstens zwei Rastnasen (24a, 24b) gemeinsam einen Abschnitt eines Schraubkanals (16a) in dem Dübel (1; 11) bilden.

11. Dübel nach wenigstens einem der Ansprüche 6 bis 10, **dadurch gekennzeichnet, dass** zwei bis sechs Rastnasen (24a, 24b), insbesondere vier Rastnasen, an jedem Dübelteil (10a, 10b, 100b) vorgesehen sind.

12. Dübel nach wenigstens einem der Ansprüche 6 bis 11, **dadurch gekennzeichnet, dass** das erste Dübelteil (10a) und das zweite Dübelteil (10b, 100b) jeweils wenigstens zwei sich im Wesentlichen parallel zur Mittellängsachse (8) des Dübels (1; 11) erstreckende Rastarme (22a, 22b) aufweisen, an deren Ende jeweils eine sich senkrecht zur Mittellängsachse (8) erstreckende Rastnase (24a, 24b) angeordnet ist.

13. Dübel nach Anspruch 12, **dadurch gekennzeichnet, dass** dann, wenn sich die beiden Dübelteile (10a, 10b, 100b) relativ zueinander zwischen den beiden Endpositionen befinden, in einer Projektion parallel zur Mittellängsachse (8) gesehen, jeweils eine Rastnase (24a) des ersten Dübelteils (10a) zwischen zwei Rastnasen (24b) des zweiten Dübelteils (10b, 100b) angeordnet ist.

14. Dübel nach wenigstens einem der Ansprüche 6 bis 13, **dadurch gekennzeichnet, dass** im zusammengesteckten Zustand der Dübelteile (10a, 10b, 100b) und dann, wenn die beiden Dübelteile (10a, 10b, 100b) die zweite Endposition zueinander einnehmen, die Rastnasen (24a) des ersten Dübelteils (10a) und die Rastnasen (24b) des zweiten Dübelteils (10b, 100b) lediglich im Bereich von Rastflächen aneinander anliegen, die an seitlichen Begrenzungen der Rastnasen (24a, 24b) anschließen.

15. Dübel nach wenigstens einem der vorstehenden Ansprüche, **dadurch gekennzeichnet, dass** die beiden Dübelteile (10b, 100b) identisch zueinander ausgebildet sind.

16. Verfahren zum Fixieren wenigstens eines Dübels (1; 11) nach einem der vorstehenden Ansprüche in einer Leichtbauplatte (50) mit folgenden Schritten: Einbringen eines Lochs in eine Leichtbauplatte (50), insbesondere eines Sacklochs (58), Einbringen des Dübels (1; 11) im zusammengesteckten Zustand in das Sackloch (58), wobei die Dübelteile (10a, 10b, 100b) sich im zusammengesteckten Zustand relativ zueinander zwischen der ersten Endposition und der zweiten Endposition verschieben können, Beaufschlagen des Dübels (1; 11) mit Ultraschallenergie, so dass das Material des Dübels (1; 11) wenigstens in den Bereichen, in denen der Dübel (1; 11) an der Innenwandung des Lochs im Bereich der ersten Deckschicht (52), der zweiten Deckschicht (54) und/oder im Bereich der Kernschicht (56) anliegt, erwärmt und in pastösen oder fließfähigen Zustand gebracht wird, in wenigstens eine der Deckschichten (52, 54) und/oder die Kernschicht (56) eindringt und nach dem Abschalten der Ultraschallenergie erkaltet, so dass der Dübel (1; 11) stoffschlüssig und/oder formschlüssig in der Leichtbauplatte (50) fixiert wird.

17. Anordnung mit wenigstens einem Dübel (1; 11) nach einem der Ansprüche 1 bis 15 und einer Leichtbauplatte (50).

## Claims

1. Anchor (1; 11) for arrangement in lightweight building boards (50), wherein a lightweight building board (50) has a first covering layer (52) and a second covering layer (54) made from compact material that is stiff in compression, and a core layer, which is arranged between the covering layers and is made from material with a low density in comparison with the covering layers (52; 54), in particular paper honeycomb, foam or solid wood of low density, having a first anchor part (10a) and a second anchor part (101, 100b), wherein the first and the second anchor part (10a, 10b, 100b) are designed to be movable relative to one another, **characterized in that** a travel (Z) between a first end position and a second end position is limited to provide a means of retention during transportation, wherein the first end position is defined by means of first stop means on the first and the second anchor part, and the second end position is defined by means of second stop means on the first and the second anchor part.

2. Anchor according to Claim 1, **characterized in that** the first end position and the second end position define a travel (Z) of between 100 micrometres and 1000 micrometres, in particular between 150 micrometres and 240 micrometres.

3. Anchor according to Claim 1 or 2, **characterized in that** the first end position and the second end position define a travel (Z) which is between twice and four times the amplitude of an ultrasonic sonotrode used to apply ultrasound to the anchor (1; 11), in particular three times the amplitude of the sonotrode.

4. Anchor according to at least one of the preceding claims, **characterized in that** the first anchor part (10a) and the second anchor part (10b, 100b) each have at least two fingers (14a, 14b) extending parallel to a longitudinal direction of the anchor (1; 11), wherein the fingers (14a) of the first anchor part (10a) and the fingers (14b) of the second anchor part (10b, 100b) engage at least partially in one another in the assembled state of the first and the second anchor part (10a, 10b, 100b), and **in that** the first stop means, which define the first end position, are embodied by means of at least one of the fingers (14a, 14b) of one of the anchor parts (10a, 10b, 100b), which rests by its free end against an opposite element of the respective other anchor part (10a, 10b, 100b).

5. Anchor according to at least one of the preceding claims, **characterized in that** the second stop means, which define the second end position, are embodied by means of latching elements (18a, 18b) on the two anchor parts (10a, 10b, 100b).

6. Anchor according to at least one of the preceding claims, **characterized in that** the latching elements (18a, 18b) have projecting latching noses (24a, 24b) which project at least partially radially inwards, in the direction of a central longitudinal axis (8) of the anchor part (10a, 10b, 100b).

7. Anchor according to Claim 6, **characterized in that** each latching nose (24a, 24b) is arranged on a latching arm extending substantially parallel to the central longitudinal axis (8) of the anchor part (10a, 10b, 100b).

8. Anchor according to Claim 6 or 7, **characterized in that** the latching noses (24a, 24b) have a rounded shape in a direction parallel to the central longitudinal axis (8) of the anchor part (10a, 10b, 100b) .

9. Anchor according to Claim 6, 7 or 8, **characterized in that** the latching noses (24a, 24b) each have at least one run-on bevel when viewed in a direction perpendicular to the central longitudinal axis (8).

10. Anchor according to at least one of preceding Claims 6 to 9, **characterized in that** at least two latching noses (24a, 24b) jointly form a section of a screw channel (16a) in the anchor (1; 11).

11. Anchor according to at least one of Claims 6 to 10, **characterized in that** two to six latching noses (24a, 24b), in particular four latching noses, are provided on each anchor part (10a, 10b, 100b).

12. Anchor according to at least one of Claims 6 to 11, **characterized in that** the first anchor part (10a) and the second anchor part (10b, 100b) each have at least two latching arms (22a, 22b) which extend substantially parallel to the central longitudinal axis (8) of the anchor (1; 11) and at the end of each of which a latching nose (24a, 24b) extending perpendicularly to the central longitudinal axis (8) is arranged.

13. Anchor according to Claim 12, **characterized in that** when the two anchor parts (10a, 10b, 100b) are between the two end positions relative to one another, in each case one latching nose (24a) of the first anchor part (10a) is arranged between two latching noses (24b) of the second anchor part (10b, 100b), when viewed in a projection parallel to the central longitudinal axis (8).

14. Anchor according to at least one of Claims 6 to 13, **characterized in that**, in the assembled state of the anchor parts (10a, 10b, 100b) and when the two anchor parts (10a, 10b, 100b) occupy the second end position relative to one another, the latching noses (24a) of the first anchor part (10a) and the latching noses (24b) of the second anchor part (10b, 100b) rest against one another only in the region of latching surfaces which adjoin the lateral boundaries of the latching noses (24a, 24b).

15. Anchor according to at least one of the preceding claims, **characterized in that** the two anchor parts (10b, 100b) are of identical design to one another.

16. Method for fixing at least one anchor (1; 11) according to any of the preceding claims in a lightweight building board (50), having the following steps: introducing a hole into a lightweight building board (50), in particular a blind hole (58), introducing the anchor (1; 11) into the blind hole (58) in the assembled state, wherein the anchor parts (10a, 10b, 100b) can move relative to one another between the first end position and the second end position in the assembled state, applying ultrasonic energy to the anchor (1; 11), with the result that the material of the anchor (1; 11) is heated and converted to a pasty or flowable state, at least in the regions in which the anchor (1; 11) rests against the inner wall of the hole in the region of the first covering layer (52), of the second covering layer (54) and/or in the region of the core layer (56), penetrates into at least one of the covering layers (52, 54) and/or the core layer (56), and cools down after the ultrasonic energy is switched off, with the result that the anchor (1; 11) is fixed by material bonding and/or positively in the lightweight building board (50).

17. Assembly having at least one anchor (1; 11) according to any of the preceding Claims 1 to 15 and a lightweight building board (50).

## Revendications

1. Cheville (1 ; 11) destinée à être agencée dans des panneaux de construction légers (50), un panneau de construction léger (50) présentant une première couche de couverture (52) et une deuxième couche de couverture (54) d'un matériau compact, rigide en compression, et une couche centrale disposée entre les couches de couverture, d'un matériau ayant une densité inférieure par rapport aux couches de couverture (52 ; 54), en particulier en carton alvéolé, en mousse alvéolaire ou en bois plein de faible densité, comprenant une première partie de cheville (10a) et une deuxième partie de cheville (101, 100b), la première et la deuxième partie de cheville (10a, 10b, 100b) étant réalisées en étant coulissantes l'une par rapport à l'autre,
**caractérisée en ce qu'**une course de coulissement (Z) entre une première position d'extrémité et une deuxième position d'extrémité est limitée afin de fournir une sécurité de transport, la première position d'extrémité étant définie à l'aide de premiers moyens de butée au niveau de la première et de la deuxième partie de cheville, et la deuxième position d'extrémité étant définie à l'aide de deuxièmes moyens de butée au niveau de la première et de la deuxième partie de cheville.

2. Cheville selon la revendication 1, **caractérisée en ce que** la première position d'extrémité et la deuxième position d'extrémité définissent une course de coulissement (Z) comprise entre 100 micromètres et 1000 micromètres, en particulier entre 150 micromètres et 240 micromètres.

3. Cheville selon la revendication 1 ou 2, **caractérisée en ce que** la première position d'extrémité et la deuxième position d'extrémité définissent une course de coulissement (Z) qui est comprise entre deux et quatre fois l'amplitude d'une sonotrode à ultrasons utilisée pour soumettre la cheville (1 ; 11) aux ultrasons, étant en particulier égale à trois fois l'amplitude de la sonotrode.

4. Cheville selon au moins l'une des revendications précédentes, **caractérisée en ce que** la première partie de cheville (10a) et la deuxième partie de cheville (10b, 100b) présentent respectivement au moins deux doigts (14a, 14b) s'étendant en parallèle à une direction longitudinale de la cheville (1 ; 11), les doigts (14a) de la première partie de cheville (10a) et les doigts (14b) de la deuxième partie de cheville (10b, 100b) venant en prise les uns dans les autres au moins par endroits à l'état assemblé de la première et de la deuxième partie de cheville (10a, 10b, 100b), et **en ce que** les premiers moyens de butée qui définissent la première position d'extrémité sont réalisés à l'aide d'au moins l'un des doigts (14a, 14b) d'une des parties de cheville (10a, 10b, 100b) qui est adjacent par son extrémité libre à un élément opposé de l'autre partie de cheville (10a, 10b, 100b) respectivement.

5. Cheville selon au moins l'une des revendications précédentes, **caractérisée en ce que** les deuxièmes moyens de butée qui définissent la deuxième position d'extrémité sont réalisés à l'aide d'éléments d'arrêt (18a, 18b) sur les deux parties de cheville (10a, 10b, 100b) .

6. Cheville selon au moins l'une des revendications précédentes, **caractérisée en ce que** les éléments d'arrêt (18a, 18b) présentent des taquets d'arrêt (24a, 24b) faisant saillie au moins en partie radialement vers l'intérieur, en direction d'un axe médian longitudinal 8 de la partie de cheville (10a, 10b, 100b) .

7. Cheville selon la revendication 6, **caractérisée en ce que** respectivement un taquet d'arrêt (24a, 24b) est disposé sur un bras d'arrêt s'étendant substantiellement en parallèle à l'axe médian longitudinal (8) de la partie de cheville (10a, 10b, 100b) .

8. Cheville selon la revendication 6 ou 7, **caractérisée en ce que** les taquets d'arrêt (24a, 24b), vus dans une direction parallèle à l'axe médian longitudinal (8) de la partie de cheville (10a, 10b, 100b), présentent une forme arrondie.

9. Cheville selon la revendication 6, 7 ou 8, **caractérisée en ce que** les taquets d'arrêt (24a, 24b), vus dans une direction perpendiculaire à l'axe médian longitudinal (8), présentent respectivement au moins un biseau d'attaque.

10. Cheville selon au moins l'une des revendications précédentes 6 à 9, **caractérisée en ce qu'**au moins deux taquets d'arrêt (24a, 24b) forment ensemble un tronçon d'un canal de vissage (16a) dans la cheville (1 ; 11).

11. Cheville selon au moins l'une des revendications 6 à 10, **caractérisée en ce que** de deux à six taquets d'arrêt (24a, 24b), en particulier quatre taquets d'arrêt, sont prévus sur chaque partie de cheville (10a, 10b, 100b).

12. Cheville selon au moins l'une des revendications 6 à 11, **caractérisée en ce que** la première partie de cheville (10a) et la deuxième partie de cheville (10b, 100b) présentent respectivement au moins deux bras d'arrêt (22a, 22b) s'étendant substantiellement en parallèle à l'axe médian longitudinal (8) de la cheville (1 ; 11), à l'extrémité desquels est disposé respectivement un taquet d'arrêt (24a, 24b) s'étendant perpendiculairement à l'axe médian longitudinal (8).

13. Cheville selon la revendication 12, **caractérisée en ce que** lorsque les deux parties de cheville (10a, 10b, 100b) se trouvent l'une par rapport à l'autre entre les deux positions d'extrémité, vues dans une projection parallèle à l'axe médian longitudinal (8), respectivement un taquet d'arrêt (24a) de la première partie de cheville (10a) est disposé entre deux taquets d'arrêt (24b) de la deuxième partie de cheville (10b, 100b) .

14. Cheville selon au moins l'une des revendications 6 à 13, **caractérisée en ce qu'**à l'état assemblé des parties de cheville (10a, 10b, 100b), et lorsque les deux parties de cheville (10a, 10b, 100b) occupent la deuxième position d'extrémité l'une par rapport à l'autre, les taquets d'arrêt (24a) de la première partie de cheville (10a) et les taquets d'arrêt (24b) de la deuxième partie de cheville (10b, 100b) ne sont adjacents les uns aux autres que dans la zone des surfaces d'arrêt qui prolongent les limites latérales des taquets d'arrêt (24a, 24b).

15. Cheville selon au moins l'une des revendications précédentes, **caractérisée en ce que** les deux parties de cheville (10b, 100b) sont réalisées de manière identique l'une à l'autre.

16. Procédé de fixation d'au moins une cheville (1 ; 11) selon l'une quelconque des revendications précédentes dans un panneau de construction léger (50), comprenant les étapes suivantes consistant à : pratiquer un trou dans un panneau de construction léger (50), en particulier un trou borgne (58), introduire la cheville (1 ; 11) à l'état assemblé dans le trou borgne (58), les parties de cheville (10a, 10b, 100b) à l'état assemblé étant coulissantes l'une par rapport à l'autre entre la première position d'extrémité et la deuxième position d'extrémité, soumettre la cheville (1 ; 11) à de l'énergie ultrasonore de sorte que le matériau de la cheville (1 ; 11), au moins dans les zones où la cheville (1 ; 11) est adjacente à la paroi intérieure du trou dans la zone de la première couche de couverture (52), de la deuxième couche de couverture (54) et/ou dans la zone de la couche centrale (56), chauffe et soit amené à un état pâteux ou coulant, pénètre dans au moins l'une des couches de couverture (52, 54) et/ou la couche centrale (56) et refroidit après la coupure de l'énergie ultrasonore de sorte que la cheville (1 ; 11) soit fixée dans le panneau de construction léger (50) par liaison de matière et/ou par complémentarité de forme.

17. Agencement comprenant au moins une cheville (1 ; 11) selon l'une quelconque des revendications 1 à 15 et un panneau de construction léger (50).
